# EUROPÄISCHE PATENTSCHRIFT

(11) **EP 3 394 132 B1**
(45) Veröffentlichungstag und Bekanntmachung des Hinweises auf die Patenterteilung: **09.11.2022**
(21) Anmeldenummer: 16812772.8
(22) Anmeldetag: 20.12.2016
(51) Int. Cl.: C08G 18/48, C08G 18/66, C08G 18/76, C08G 18/79, C08G 18/12, C08G 18/22, C09D 175/04, C08G 18/32, C09J 175/04

(54) **ZWEIKOMPONENTIGE POLYURETHANZUSAMMENSETZUNG**
TWO-COMPONENT POLYURETHANE COMPOSITION
COMPOSITION DE POLYURETHANE BI-COMPOSANTS

(30) Priorität: 21.12.2015 EP 15201651
(43) Veröffentlichungstag der Anmeldung: 31.10.2018
(73) Patentinhaber: Sika Technology AG, 6340 Baar (CH)
(72) Erfinder: BURCKHARDT, Urs, 8049 Zürich (CH); KRAMER, Andreas, 8006 Zürich (CH)
(74) Vertreter: Sika Patent Attorneys
(86) Internationale Anmeldenummer: PCT/EP2016/081986
(87) Internationale Veröffentlichungsnummer: WO 2017/108832

(56) Entgegenhaltungen:
- EP-A1- 1 524 282
- EP-A1- 2 706 073
- EP-A1- 2 857 378

## Beschreibung

### Technisches Gebiet

Die Erfindung betrifft Aldimine und Polyurethane, sowie Klebstoffe, Dichtstoffe und Beschichtungen.

### Stand der Technik

Härtbare Polyurethanzusammensetzungen werden breit eingesetzt, unter anderem für elastische Verklebungen, Abdichtungen und Beschichtungen. Zweikomponentige Systeme bieten dabei im Vergleich zu einkomponentigen Systemen den Vorteil, rasch Festigkeit aufzubauen und in ihren Gebrauchseigenschaften ein breiteres Spektrum an mechanischen Eigenschaften abzudecken, von viskoelastisch bis zu hochstrukturell. Zweikomponentige Systeme bestehend aus einer Polyol- und einer Isocyanat-Komponente weisen aber die Schwierigkeit auf, dass ihre Aushärtung durch Feuchtigkeit erheblich gestört werden kann, was oft zu einer ungenügenden Festigkeit führt. Durch Mitverwendung von Aminen in der Polyol-Komponente sind die Systeme bei der Aushärtung weniger anfällig auf Störungen durch Feuchtigkeit, erreichen höhere Früh- und Endfestigkeiten und zeigen eine erhöhte Beständigkeit. Allerdings haben sie aufgrund der schnellen Reaktion zwischen Amino- und Isocyanatgruppen oft nur eine kurze Offenzeit, wodurch sie für viele Anwendungen ungeeignet sind. Systeme mit genügend langer Offenzeit für eine Handverarbeitung werden im allgemeinen nur mit gegenüber Isocyanaten langsam reagierenden Aminen, die sterisch gehinderte und/oder elektronisch deaktivierte Aminogruppen aufweisen, erhalten. Um eine einfache und lösemittelfreie Einarbeitung zu ermöglichen, ist es ausserdem vorteilhaft, wenn das Amin bei Raumtemperatur flüssig ist. Mit diesen Bedingungen engt sich die Auswahl auf wenige technisch erhältliche Amine ein, die teuer und aufgrund ihres aromatischen Charakters toxisch sind.

Anstelle von freien Aminen können auch blockierte, hydrolytisch aktivierbare Amine, sogenannte latente Härter, verwendet werden, beispielsweise Oxazolidine, Ketimine oder Aldimine, wie sie aus einkomponentigen Polyurethan-Zusammensetzungen bekannt sind. Ihr Einsatz in zweikomponentigen Polyurethanen bringt aber zusätzliche Schwierigkeiten mit sich. So können die latenten Härter während der Lagerung hydrolysieren oder oligomerisieren, insbesondere unter Temperatur- oder Baseneinfluss, was die Haltbarkeit der Zusammensetzungen bzw. den Formulierungsspielraum für die einzelnen Komponenten einschränkt. Weiterhin können die latenten Härter trotz der Blockierung der Aminogruppen noch immer so reaktiv mit Isocyanaten sein, dass sich eine kurze Topf- bzw. Offenzeit und damit ein unerwünscht kurzes Verarbeitungsfenster ergibt. Das aus dem latenten Härter freigesetzte Blockierungsmittel kann bei der Aushärtung zu störenden Geruchsimmissionen und/oder zu Problemen mit Wecihmacher-Migration führen. Im Fall von Aldiminen kommt hinzu, dass die Aktivierung der blockierten Aminogruppen durch Hydrolyse, die bei Aldiminogruppen nicht spontan verläuft, und die Reaktion der OH-Gruppen mit Isocyanaten in geeigneter Weise aufeinander abgestimmt sein müssen, damit die Aushärtung störungsfrei, insbesondere ohne Blasenbildung, abläuft und das entstehende Polymer in Bezug auf seine Festigkeit und Elastizität aus dem blockierten Amin Nutzen ziehen kann.

EP 1 524 282 beschreibt zweikomponentige Polyurethanzusammensetzungen bestehend aus einer ersten und einer zweiten Komponente, wobei die erste Komponente mindestens ein Polyurethanprepolymer und die zweite Komponente Wasser und mindestens ein Polyaldimin enthält. Dabei ist die erste Komponente so fomuliert, dass sie mit Luftfeuchtigkeit auch allein zu einem elastischen Material aushärtet, und die zweite Komponente dient zur Beschleunigung der Aushärtung, wobei die mechanischen Eigenschaften des gebildeten Materials durch das vorhandene Polyaldimin in einem gewissen Bereich variierbar sind. Die mit solchen Zusammensetzungen erreichbaren Härten sind nicht sehr hoch; in den Beispielen werden Shore A-Härten um 45 erreicht. Für klassische zweikomponentige Polyurethanzusammensetzungen mit einer Polyol-Komponente und einer Isocyanat-Komponente werden aber deutlich härtere Materialien mit Shore A-Härten von 80 und darüber erwartet. Die offenbarten Aldimine mit substituierten Arylresten zeigen diverse Nachteile. Einerseits sind sie geruchsintensiv, andererseits ergeben sie meist hochviskose, bei Raumtemperatur schwer handhabbare Aldimine.

EP 2 706 073 beschreibt zweikomponentige, latente Härter enthaltende Polyurethanzusammensetzungen, welche aufgrund der Anwesenheit spezieller Katalysatoren vollständig und blasenfrei aushärten. Die offenbarten Aldimine weisen aber Nachteile auf. Die Estergruppen aufweisenden Aldimine sind nur beschränkt lagerstabil in der Polyol-Komponente, vor allem wenn diese basisch und/oder über einige Zeit erhöhten Temperaturen ausgesetzt ist. Bei ihrer Hydrolyse werden Ester-Aldehyde freigesetzt, die zwar geruchsfrei sind, wegen ungenügender Verträglichkeit mit der ausgehärteten Zusammensetzung aber zu Weichmacher-Migration neigen, was sich durch Ausschwitzen (Bleeding) oder Substratverfärbung oder Spannungsrissbildung im Substrat zeigen kann. Die tertiäre Aminogruppen aufweisenden Aldimine sind nicht geruchsfrei und bewirken eine sehr kurze Offenzeit, insbesondere mit aromatischen Isocyanaten; die tertiäre Aminogruppe kann zudem aufgrund ihrer katalytischen Wirkung auf Isocyanatgruppen Blasenbildung und klebrige Oberflächen verursachen. Die Oxazolidine und Ketimine wiederum verursachen bei der Aushärtung starke Geruchsimmissionen, haben teilweise sehr kurze Offenzeiten und können in Kunststoff-Substraten Spannungsrissbildung verursachen.

EP 2 857 378 A1 offenbart aromatische, mit C10 bis C14 Alkylresten substituierte Aldehyde, die Anwendung in Epoxidharz-basierte Beschichtungen finden. Die resultierenden Beschichtungen zeigen deutlich verbesserte Eigenschaften bezüglich Oberflächeneigenschaften, Trocknungseigenschaften, Wasserbeständigkeit, Transparenz und Adhäsion gegenüber vergleichbaren Beschichtungszusammensetzungen, die keine aromatischen Aldehyde enthalten.

### Darstellung der Erfindung

Aufgabe der vorliegenden Erfindung ist es daher, zweikomponentige Polyurethanzusammensetzungen zur Verfügung zu stellen, welche die Nachteile des Standes der Technik überwinden.

Überraschenderweise wurde gefunden, dass eine Zusammensetzung wie in Anspruch 1 beschrieben diese Aufgabe löst. Ihre Komponenten sind sehr lagerstabil, insbesondere auch bei erhöhten Temperaturen und auch für den Fall, dass die Polyol-Komponente Aldimine der Formel (I) und Wasser und/oder basische Verbindungen, wie insbesondere Amine, enthält. Sie verfügt über eine vergleichsweise lange Offenzeit, so dass die Zusammensetzung über einen längeren Zeitraum nach ihrer Applikation einen nahtlosen Verlauf oder eine Positionierung oder Nachjustierung der damit verbundenen Objekte ermöglicht. Die Aushärtung verläuft rasch und vollständig, ohne Blasenbildung und ohne Geruchsimmissionen. Die beobachtete Kombination aus langer Offenzeit und schneller Aushärtung ist dabei besonders überraschend und für viele Anwendungen besonders vorteilhaft. Die Zusammensetzung härtet blasenfrei aus und bildet dabei ein festes Material mit nichtklebriger Oberfläche und ausgezeichneten mechanischen Eigenschaften und hoher Beständigkeit, welches nicht zu Problemen mit Weichmacher-Migration wie Ausschwitzen (Bleeding), Substratverfärbung oder Spannungsrissbildung im Substrat neigt. Der bei der Aushärtung aus dem Aldimin freigesetzte Aldehyd ist geruchlos und weitgehend unflüchtig, verbleibt zum grössten Teil in der ausgehärteten Zusammensetzung, ist mit dieser sehr gut verträglich und neigt kaum zu Weichmacher-Migration.

Die geringe Neigung zu Weichmachermigration ist überraschend. Aldimine, deren Abspalter ein hohes Molekulargewicht aufweisen, sind naturgemäss besonders kritisch in Bezug auf Weichmachermigration nach der Aushärtung, da die eingesetzte Menge aufgrund des hohen Equivalentgewichts entsprechend hoch ist und somit eine hohe Menge an freigesetzem Aldehyd im ausgehärteten Material verbleibt. Zudem liesse der langkettige hydrophobe Substituent, insbesondere bei verzweigter Struktur, im hydrophilen, Wasserstoffbrücken aufweisenden Polymergerüst von Polyurethanen eine eher schlechte Verträglichkeit erwarten.

Im Vergleich mit Zusammensetzungen enthaltend langkettige Esteraldimine, wie sie aus dem Stand der Technik bekannt sind, ist die erfindungsgemässe Zusammensetzung besser lagerstabil, härtet bei ähnlicher Offenzeit deutlich schneller aus, verfügt im ausgehärteten Zustand über bessere mechanische Eigenschaften, insbesondere höhere Festigkeit und Dehnbarkeit, und neigt weniger zu Problemen mit Weichmacher-Migration.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung umfassend
- eine erste Komponente enthaltend mindestens ein Polyol, und
- eine zweite Komponente enthaltend mindestens ein Polyisocyanat,

wobei die Zusammensetzung weiterhin mindestens ein Aldimin der Formel (I) enthält, 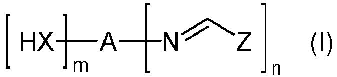
wobei
   m für 0 oder 1 und n für eine ganze Zahl von 1 bis 4 steht, wobei (m+n) für 2 oder 3 oder 4 steht,
   Z für einen mit einer Alkyl- oder Alkoxy-Gruppe substituierten Aryl-Rest mit insgesamt 12 bis 26 C-Atomen steht, und
   A für einen (m+n)-wertigen aliphatischen, cycloaliphatischen oder arylaliphatischen, gegebenenfalls Ether-Sauerstoff oder Amin-Stickstoff aufweisenden Kohlenwasserstoff-Rest mit einem Molekulargewicht im Bereich von 28 bis 6'000 g/mol steht, und
   X für O oder S oder NR⁰ steht, wobei R⁰ für einen Wasserstoff-Rest oder für einen Kohlenwasserstoff-Rest mit 1 bis 30 C-Atomen steht, welcher gegebenenfalls mindestens eine Carbonsäureester-, Nitril-, Nitro-, Phosphonsäureester-, Sulfon- oder Sulfonsäureester-Gruppe oder Aldiminogruppe der Formel 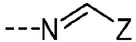 aufweist.

Eine gestrichelte Linie in den Formeln stellt jeweils die Bindung zwischen einem Substituenten und dem zugehörigen Molekülrest dar.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Mit "Poly" beginnende Substanznamen wie Polyamin, Polyol oder Polyisocyanat bezeichnen Substanzen, die formal zwei oder mehr der in ihrem Namen vorkommenden funktionellen Gruppen pro Molekül enthalten.

Als "primäres Polyamin" wird eine Verbindung mit mindestens zwei primären Aminogruppen bezeichnet.

Als "primäre Hydroxylgruppe" wird eine Hydroxylgruppe bezeichnet, die an eine CH₂-Einheit gebunden ist.

Als "aromatisches Isocyanat" wird ein Isocyanat bezeichnet, dessen Isocyanatgruppen direkt an ein aromatisches C-Atom gebunden sind. Dementsprechend werden solche Isocyanatgruppen als "aromatische Isocyanatgruppen" bezeichnet.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird üblicherweise mittels Gelpermeationschromatographie (GPC) gegen Polystyrol als Standard bestimmt.

Mit dem Begriff "Viskosität" wird die dynamische Viskosität oder Scherviskosität bezeichnet, welche durch das Verhältnis zwischen der Schubspannung und der Scherrate (Geschwindigkeitsgefälle) definiert ist und wie in DIN EN ISO 3219 beschrieben bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23°C bezeichnet.

Die beiden Komponenten der Zusammensetzung werden getrennt voneinander hergestellt und in separaten feuchtigkeitsdichten Gebinden gelagert, bis sie zur Anwendung kurz vor oder während der Applikation miteinander vermischt werden und die Zusammensetzung schliesslich aushärtet.

Die Zusammensetzung enthält mindestens ein Aldimin der Formel (I).

Das Aldimin der Formel (I) kann in der ersten und/oder in der zweiten Komponente enthalten sein.

Das Aldimin der Formel (I) ist bevorzugt Bestandteil der ersten Komponente. Dies gilt insbesondere für den Fall, dass das Aldimin der Formel (I) ein Aldimin der Formel (I) mit m=1 darstellt.

Z steht bevorzugt für einen Rest der Formel (II), 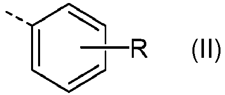 wobei R für einen linearen oder verzweigten Alkyl- oder Alkoxy-Rest mit 6 bis 20, bevorzugt 8 bis 16, C-Atomen steht.

R steht bevorzugt für einen linearen oder verzweigten Alkyl-Rest mit 10 bis 14 C-Atomen oder für einen linearen oder verzweigten Alkoxy-Rest mit 8 bis 12 C-Atomen.

R steht insbesondere für einen linearen oder verzweigten Alkyl-Rest mit 10 bis 14 C-Atomen. Ein solches Aldimin ist besonders reaktiv.

R steht besonders bevorzugt für einen verzweigten Alkyl-Rest. Ein solches Aldimin ist bei Raumtemperatur typischerweise flüssig und vergleichsweise niedrigviskos, was für seine Handhabung sehr vorteilhaft ist.

R steht ganz besonders bevorzugt für einen verzweigten Alkyl-Rest mit 10 bis 14 C-Atomen. Ein solches Aldimin ist besonders reaktiv, bei Raumtemperatur meist flüssig und vergleichsweise niedrigviskos.

Bevorzugt steht R in meta- oder para-Stellung, insbesondere in para-Stellung. Ein solches Aldimin ist besonders gut zugänglich.

Ganz besonders bevorzugt steht R für einen Rest der Formel 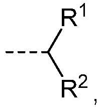 wobei R¹ und R² jeweils für einen Alkyl-Rest stehen und zusammen 9 bis 13 C-Atome aufweisen. Bevorzugt sind die Reste R¹ und R² jeweils linear.

Am meisten bevorzugt steht Z somit für einen Rest der Formel (IIa), 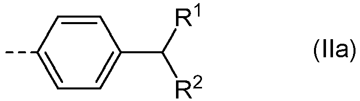 wobei R¹ und R² die genannten Bedeutungen aufweisen.

Die bevorzugten Reste Z sind besonders gut zugänglich und ermöglichen besonders geruchsarme Aldimine, welche bei Raumtemperatur insbesondere flüssig und besonders niedrigviskos sind.

Bevorzugt steht (m+n) für 2 oder 3. n steht bevorzugt für 1 oder 2 oder 3.

In einer bevorzugten Ausführungsform stehen m für 0 und n für 2 oder 3. Diese Aldimine reagieren in Abwesenheit von Feuchtigkeit nicht mit Isocyanaten.

In einem solchen Aldimin der Formel (I) steht A bevorzugt
- entweder für einen zwei- oder dreiwertigen aliphatischen oder cycloaliphatischen Kohlenwasserstoff-Rest mit einem Molekulargewicht im Bereich von 28 bis 500 g/mol,
- oder für einen zwei- oder dreiwertigen Polyoxyalkylen-Rest mit einem zahlenmittleren Molekulargewicht im Bereich von 170 bis 6'000 g/mol.

Dabei ist A besonders bevorzugt ausgewählt aus der Gruppe bestehend aus 1,2-Ethylen, 1,2-Propylen, 1,3-Propylen, 1,4-Butylen, 1,3-Pentylen, 1,5-Pentylen, 2-Methyl-1,5-pentylen, 1,6-Hexylen, 2,2(4),4-Trimethyl-1,6-hexamethylen, 1,8-Octylen, 1,10-Decylen, 1,12-Dodecylen, 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis-(methylen), Methylendicyclohexan-4-yl, Methylenbis(2-methylcyclohexan-4-yl), (Bicyclo[2.2.1]heptan-2,5(2,6)-diyl)dimethylen, (Tricyclo[5.2.1.0^{2,6}]decan-3(4),8(9)-diyl)dimethylen, 1,3-Phenylen-bis(methylen), 1,4-Phenylen-bis(methylen), 3-Oxa-1,5-pentylen, 3,6-Dioxa-1,8-octylen, 4,7-Dioxa-1,10-decylen, α,ω-Polyoxypropylen mit einem zahlenmittleren Molekulargewicht im Bereich von 170 bis 2'000 g/mol und Trimethylolpropan- oder Glycerin-gestartetes Tris(ω-polyoxypropylen) mit einem zahlenmittleren Molekulargewicht im Bereich von 330 bis 5'000 g/mol.

Davon bevorzugt ist 2-Methyl-1,5-pentylen, 1,6-Hexylen, 2,2(4),4-Trimethyl-1,6-hexamethylen, 1,2-Cyclohexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis(methylen), Methylendicyclohexan-4-yl, (Bicyclo[2.2.1]heptan-2,5(2,6)-diyl)dimethylen, (Tricyclo[5.2.1.0^{2,6}]decan-3(4),8(9)-diyl)dimethylen, 1,3-Phenylen-bis(methylen), 1,4-Phenylen-bis(methylen), α,ω-Polyoxypropylen mit einem zahlenmittleren Molekulargewicht im Bereich von 170 bis 2'000 g/mol oder Trimethylolpropan- oder Glycerin-gestartetes Tris(ω-polyoxypropylen) mit einem zahlenmittleren Molekulargewicht im Bereich von 330 bis 5'000 g/mol.

Besonders bevorzugt ist 1,6-Hexylen, 1,3-Cyclohexylen-bis(methylen), 1,4-Cyclohexylen-bis(methylen), 1,3-Phenylen-bis(methylen) oder 1,4-Phenylen-bis-(methylen). Diese Aldimine der Formel (I) ermöglichen eine besonders schnelle Aushärtung.

Davon weiterhin besonders bevorzugt ist 1,2-Cyclohexylen, Methylendicyclohexan-4-yl, (1,5,5-Trimethylcyclohexan-1-yl)methan-1,3, (Bicyclo[2.2.1]heptan-2,5(2,6)-diyl)dimethylen oder (Tricyclo[5.2.1.0^{2,6}]decan-3(4),8(9)-diyl)dimethylen. Diese Aldimine der Formel (I) ermöglichen besonders hohe Festigkeiten, insbesondere in Kombination mit IPDI oder von IPDI abgeleiteten Polyisocyanaten.

Davon weiterhin besonders bevorzugt ist α,ω-Polyoxypropylen mit einem zahlenmittleren Molekulargewicht im Bereich von 170 bis 500 g/mol oder Trimethylolpropan- oder Glycerin-gestartetes Tris(ω-polyoxypropylen) mit einem zahlenmittleren Molekulargewicht im Bereich von 330 bis 500 g/mol. Diese Aldimine der Formel (I) ermöglichen besonders hohe Dehnungen.

In einer weiteren bevorzugten Ausführungsform stehen m für 1 und n für 1. Diese Aldimine weisen eine Reaktivgruppe HX auf, welche mit Isocyanaten Additionsreaktionen eingehen kann.

Solche Aldimine Formel (I) steht gegebenenfalls im Gleichgewicht mit einer cyclischen Verbindung der Formel (I'), 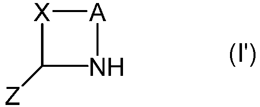 wobei X, A und Z die bereits genannten Bedeutungen aufweisen. Verbindungen der Formel (I') werden insbesondere für den Fall beobachtet, dass die Aldiminogruppe und die HX-Gruppe im Aldimin der Formel (I) durch zwei oder drei Kohlenstoffatome getrennt sind; sie stellen dabei 2-substituierte 1,3-Oxazolidine (5-Ring) oder Tetrahydro-1,3-oxazine (6-Ring) dar.

In einem Aldimin der Formel (I) mit m=1 und n=1 steht A bevorzugt für einen zweiwertigen aliphatischen oder cycloaliphatischen oder arylaliphatischen, gegebenenfalls Ether-Sauerstoff oder Amin-Stickstoff aufweisenden Kohlenwasserstoff-Rest mit einem Molekulargewicht im Bereich von 28 bis 500 g/mol.

Dabei ist A besonders bevorzugt ausgewählt aus der Gruppe bestehend aus 1,2-Ethylen, 1,2-Propylen, 1,3-Propylen, 1,5-Pentylen, 1,6-Hexylen, (1,5,5-Trimethylcyclohexan-1-yl)methan-1,3 und 3-Oxa-1,5-pentylen.

Davon bevorzugt ist 1,2-Ethylen, 1,3-Propylen, 1,6-Hexylen, (1,5,5-Trimethylcyclohexan-1-yl)methan-1,3 oder 3-Oxa-1,5-pentylen.

Bevorzugt steht X für O oder für NR⁰.

Bevorzugt steht R⁰ für einen Wasserstoff-Rest oder einen einwertigen Kohlenwasserstoff-Rest mit 1 bis 18, insbesondere 1 bis 12, C-Atomen, oder für 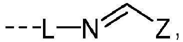 wobei L für einen Alkylen-Rest mit 1 bis 6 C-Atomen, insbesondere Ethylen, 1,3-Propylen oder 1,6-Hexylen, steht.

Besonders bevorzugt steht R⁰ für einen einwertigen Kohlenwasserstoff-Rest mit 1 bis 12 C-Atomen oder für 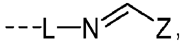 insbesondere für 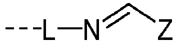 oder Methyl, Ethyl, Cyclohexyl oder Benzyl.

Für den Fall, dass X für O steht, steht A insbesondere für (1,5,5-Trimethylcyclohexan-1-yl)methan-1,3 oder 3-Oxa-1,5-pentylen.

Für den Fall, dass X für NR⁰ steht, stehen insbesondere A für Ethylen und R⁰ für 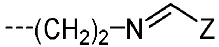 oder 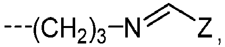 oder A für 1,3-Propylen und R⁰ für 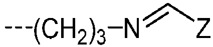 oder Methyl, Ethyl oder Cyclohexyl, oder A für 1,6-Hexylen und R⁰ für

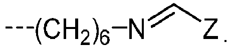

Die bevorzugten Aldimine der Formel (I) sind besonders gut zugänglich und ermöglichen Zusammensetzungen mit besonders guter Lagerstabiltität, Verarbeitbarkeit und/oder mechanischen Eigenschaften.

Das Aldimin der Formel (I) wird bevorzugt erhalten aus der Umsetzung von mindestens einem Amin der Formel (III) mit mindestens einem Aldehyd der Formel (IV) in einer Kondensationsreaktion unter Freisetzung von Wasser.

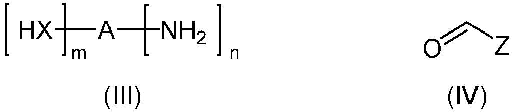

In den Formeln (III) und (IV) weisen m, n, X, A und Z die bereits genannten Bedeutungen auf.

Der Aldehyd der Formel (IV) wird dabei bevorzugt stöchiometrisch oder im stöchiometrischen Überschuss in Bezug auf die primären Aminogruppen eingesetzt. Auf diese Weise ist das Reaktionsprodukt weitgehend oder ganz frei von primären Aminogruppen.

Das Aldimin der Formel (I) wird bevorzugt in Form eines Reaktionsprodukts aus dieser Umsetzung eingesetzt, wobei der Aldehyd stöchiometrisch oder im stöchiometrischen Überschuss in Bezug auf die primären Aminogruppen vorhanden war.

Die Umsetzung wird vorteilhaft bei einer Temperatur im Bereich von 15 bis 120°C, bevorzugt bei 20 bis 100°C, durchgeführt, gegebenenfalls in Anwesenheit eines Lösemittels. Das Kondensationswasser wird bevorzugt aus der Reaktionsmischung entfernt, entweder als Azeotrop mit einem geeigneten Lösemittel oder bevorzugt direkt durch Destillation, gegebenenfalls unter Vakuum.

Gegebenenfalls wird bei der Umsetzung ein Katalysator eingesetzt, insbesondere ein Säure-Katalysator.

Besonders bevorzugt wird ohne Lösemittel gearbeitet und das Kondensationswasser mittels Anlegen von Vakuum aus der erwärmten Reaktionsmischung entfernt.

Ein solches Reaktionsprodukt kann ohne weitere Aufarbeitung als Aldimin der Formel (I) in der Zusammensetzung verwendet werden.

Bevorzugt wird das Amin der Formel (III) mit dem Aldehyd der Formel (IV) zu einer Reaktionsmischung vereint, wobei der Aldehyd in Bezug auf die primären Aminogruppen stöchiometrisch oder im stöchiometrischen Überschuss vorhanden ist, und das Kondensationswasser mit einer geeigneten Methode aus der Reaktionsmischung entfernt wird, gegebenenfalls unter Erwärmen der Reaktionsmischung.

Als Amin der Formel (III) geeignet sind primäre aliphatische, cycloaliphatische oder arylaliphatische Polyamine, insbesondere 1,2-Ethandiamin, 1,2-Propandiamin, 1,3-Propandiamin, 1,4-Butandiamin, 1,3-Butandiamin, 2-Methyl-1,2-propandiamin, 1,3-Pentandiamin, 1,5-Pentandiamin, 2,2-Dimethyl-1,3-propandiamin, 1,6-Hexandiamin, 1,5-Diamino-2-methylpentan, 1,3,6-Triaminohexan, 1,7-Heptandiamin, 1,8-Octandiamin, 1,4,8-Triaminooctan, 2,5-Dimethyl-1,6-hexandiamin, 1,9-Nonandiamin, 2,2(4),4-Trimethyl-1,6-hexandiamin, 4-Aminomethyl-1,8-octandiamin, 5-Aminomethyl-1,8-octandiamin, 1,10-Decandiamin, 1,11-Undecandiamin, 1,6,11-Triaminoundecan, 2-Butyl-2-ethyl-1,5-pentandiamin, 1,12-Dodecandiamin, 1,2-Cyclohexandiamin, 1,3-Cyclohexandiamin, 1,4-Cyclohexandiamin, 1,3,5-Triaminocyclohexan, 1-Amino-3-aminomethyl-3,5,5-trimethylcyclohexan, 4(2)-Methyl-1,3-cyclohexandiamin, 1,3-Bis(aminomethyl)cyclohexan, 1,4-Bis(aminomethyl)cyclohexan, 1,3,5-Tris-(aminomethyl)-cyclohexan, Bis(4-aminocyclohexyl)methan, Bis(4-amino-3-methylcyclohexyl)-methan, Bis(4-amino-3-ethylcyclohexyl)methan, Bis-(4-amino-3,5-dimethylcyclohexyl)methan, Bis(4-amino-3-ethyl-5-methylcyclohexyl)methan, 2,5(2,6)-Bis-(aminomethyl)bicyclo[2.2.1]heptan, 3(4),8(9)-Bis(aminomethyl)tricyclo-[5.2.1.0^{2,6}]decan, 1,3-Bis(aminomethyl)benzol, 1,4-Bis(aminomethyl)benzol, 1,3,5-Tris(aminomethyl)benzol, 3-Oxa-1,5-pentandiamin, 3,6-Dioxaoctan-1,8-diamin, 4,7-Dioxadecan-1,10-diamin, 4,7-Dioxadecan-2,9-diamin, 4,9-Dioxa-dodecan-1,12-diamin, 5,8-Dioxadodecan-3,10-diamin, 4,7,10-Trioxatridecan-1,13-diamin, α,ω-Polyoxypropylendiamin mit einem zahlenmittleren Molekulargewicht im Bereich von 200 bis 4'000 g/mol, insbesondere die Jeffamine^{®}-Typen D-230, D-400, XTJ-582, D-2000, XTJ-578, D-4000 (alle von Huntsman), α,ω-Polyoxypropylenpolyoxyethylendiamin, insbesondere die Jeffamine^{®}-Typen ED-600, ED-900, ED-2003, HK-511 (alle von Huntsman), α,ω-Polyoxypropylenpolyoxy-1,4-butylendiamin, insbesondere die Jeffamine^{®}-Typen THF-100, THF-140, THF-230, XTJ-533 oder XTJ-536 (alle von Huntsman), α,ω-Polyoxypropylenpolyoxy-1,2-butylendiamin, insbesondere die Jeffamine^{®}-Typen XTJ-568 oder XTJ-569 (beide von Huntsman), α,ω-Polyoxy-1,2-butylendiamin, insbesondere Jeffamine^{®} XTJ-523 (von Huntsman), Trimethylolpropan- oder Glycerin-gestartetes Tris(ω-polyoxypropylenamin) mit einem mittleren Molekulargewicht im Bereich von 380 bis 6'000 g/mol, insbesondere die Jeffamine^{®}-Typen T-403, T-3000 oder T-5000 (alle von Huntsman), Trimethylolpropan-gestartetes Tris(ω-polyoxypropylen-polyoxy-1,2-butylenamin), insbesondere Jeffamine^{®} XTJ-566 (von Huntsman), N,N'-Bis(aminopropyl)piperazin, N,N-Bis(3-amino-propyl)methylamin, N,N-Bis(3-aminopropyl)ethylamin, N,N-Bis(3-aminopropyl)propylamin, N,N-Bis(3-aminopropyl)cyclohexylamin, N,N-Bis(3-aminopropyl)-2-ethylhexylamin, Tris(2-aminoethyl)amin, Tris(2-aminopropyl)amin, Tris(3-aminopropyl)amin, oder ein Produkt aus der doppelten Cyanoethylierung und nachfolgender Reduktion von Fettaminen, welches abgeleitet ist von einer natürlichen Fettsäure, wie insbesondere N,N-Bis(3-aminopropyl)cocalkylamin oder N,N-Bis(3-aminopropyl)talgalkylamin, erhältlich als Triameen^{®} Y12D bzw. Triameen^{®} YT (von Akzo Nobel).

Davon bevorzugt ist 1,2-Ethandiamin, 1,2-Propandiamin, 1,3-Propandiamin, 1,4-Butandiamin, 1,3-Pentandiamin, 1,5-Pentandiamin, 1,5-Diamino-2-methyl-pentan, 1,6-Hexandiamin, 2,2(4),4-Trimethyl-1,6-hexandiamin, 1,8-Octandiamin, 1,10-Decandiamin, 1,12-Dodecandiamin, 1,2-Cyclohexandiamin, 1,3-Cyclohexandiamin, 1,4-Cyclohexandiamin, 1-Amino-3-aminomethyl-3,5,5-trimethylcyclohexan, 4(2)-Methyl-1,3-cyclohexandiamin, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, 2,5(2,6)-Bis(aminomethyl)bicyclo[2.2.1]heptan, 3(4),8(9)-Bis(aminomethyl)tricyclo[5.2.1.0^{2,6}]decan, 1,3-Bis(aminomethyl)-benzol, 1,4-Bis(aminomethyl)benzol, 3-Oxa-1,5-pentandiamin, 3,6-Dioxaoctan-1,8-diamin, 4,7-Dioxadecan-1,10-diamin, Polyoxypropylendiamin mit einem zahlenmittleren Molekulargewicht im Bereich von 200 bis 4'000 g/mol, oder Trimethylolpropan- oder Glycerin-gestartetes Polyoxypropylentriamin mit einem zahlenmittleren Molekulargewicht im Bereich von 380 bis 6'000 g/mol. Bevorzugte Polyoxypropylendi- oder -triamine sind die kommerziellen Typen Jeffamine^{®} D-230, Jeffamine^{®} D-400, Jeffamine^{®} D-2000, Jeffamine^{®} D-4000, Jeffamine^{®} T-403, Jeffamine^{®} T-3000, Jeffamine^{®} T-5000 (von Huntsman) oder äquivalente Typen anderer Hersteller, insbesondere Jeffamine^{®} D-230, Jeff-amine^{®} D-400 oder Jeffamine^{®} T-403 oder äquivalente Typen anderer Hersteller.

Besonders bevorzugt ist 1,5-Diamino-2-methylpentan, 1,6-Hexandiamin, 2,2(4),4-Trimethyl-1,6-hexandiamin, 1,2-Cyclohexandiamin, 1-Amino-3-aminomethyl-3,5,5-trimethylcyclohexan, 4(2)-Methyl-1,3-cyclohexandiamin, 1,3-Bis-(aminomethyl)cyclohexan, 1,4-Bis(aminomethyl)cyclohexan, Bis(4-aminocyclohexyl)methan, 2,5(2,6)-Bis(aminomethyl)bicyclo[2.2.1]heptan, 3(4),8(9)-Bis-(aminomethyl)tricyclo[5.2.1.0^{2,6}]decan, 1,3-Bis(aminomethyl)benzol, 1,4-Bis-(aminomethyl)benzol, Polyoxypropylendiamin mit einem zahlenmittleren Molekulargewicht im Bereich von 200 bis 2'000 g/mol oder Trimethylolpropan-oder Glycerin-gestartetes Polyoxypropylentriamin mit einem zahlenmittleren Molekulargewicht im Bereich von 380 bis 5'000 g/mol.

Als Amin der Formel (III) geeignet sind weiterhin primäre Amine mit einer Hydroxyl- oder Mercapto- oder sekundären Aminogruppe, insbesondere 2-Aminoethanol, 2-Amino-1-propanol, 1-Amino-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol oder höhere Homologe davon, 4-(2-Aminoethyl)-2-hydroxyethylbenzol, 3-Aminomethyl-3,5,5-trimethylcyclohexanol, eine primäre Aminogruppe tragende Derivate von Glykolen wie Diethylenglykol, Dipropylenglykol, Dibutylenglykol oder höhere Oligomere oder Polymere dieser Glykole, insbesondere 2-(2-Aminoethoxy)ethanol, 2-(2-(2-Aminoethoxy)etho-xy)ethanol oder α-(2-Hydroxymethylethyl)-ω-(2-aminomethylethoxy)-poly(oxy-(methyl-1,2-ethandiyl), Produkte aus der einfachen Cyanoethylierung und anschliessender Hydrierung von Glykolen, insbesondere 3-(2-Hydroxyethoxy)propylamin, 3-(2-(2-Hydroxyethoxy)ethoxy)propylamin, 3-(6-Hydroxyhexyloxy)propylamin, Mercaptoamine wie insbesondere 2-Aminoethanthiol, 3-Aminopropanthiol, 4-Amino-1-butanthiol, 6-Amino-1-hexanthiol, 8-Amino-1-octanthiol, 10-Amino-1-decanthiol oder 12-Amino-1-dodecanthiol, weiterhin N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethylpiperidin, 3-(4-Aminobutyl)piperidin, N-(2-Aminoethyl)piperazin, N-(2-Aminopropyl)piperazin, Diamine aus der Cyanoethylierung oder Cyanobutylierung und anschliessender Hydrierung von primären Monoaminen wie insbesondere N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentyl-amin, 3-Hexylamino-1-pentylamin, 3-(2-Ethylhexyl)amino-1-pentylamin, 3-Dodecylamino-1-pentylamin oder 3-Cyclohexylamino-1-pentylamin, oder Fettdiamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, wie sie beispielsweise unter dem Handelsnamen Duomeen^{®} von Akzo Nobel erhältlich sind, die Produkte aus der Michael-artigen Addition von aliphatischen primären Diaminen mit Acrylnitril, Malein- oder Fumarsäurediestern, Citraconsäurediestern, (Meth)acrylsäureestern, (Meth)acrylsäureamiden oder Itaconsäurediestern, umgesetzt im Molverhältnis 1:1, weiterhin Bis(hexamethylen)triamin (BHMT), Diethylentriamin (DETA), Dipropylentriamin (DPTA), N-(2-Aminoethyl)-1,3-propandiamin (N3-Amin), N3-(3-Aminopentyl)-1,3-pentandiamin oder N5-(3-Amino-1-ethylpropyl)-2-methyl-1,5-pentandiamin.

Davon bevorzugt ist 2-Aminoethanol, 2-Amino-1-propanol, 1-Amino-2-propanol, 3-Amino-1-propanol, 5-Amino-1-pentanol, 6-Amino-1-hexanol, 3-Aminomethyl-3,5,5-trimethylcyclohexanol, 2-(2-Aminoethoxy)ethanol, N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, Bis(hexamethylen)triamin, Diethylentriamin, Dipropylentriamin oder N-(2-Aminoethyl)-1,3-propandiamin.

Besonders bevorzugt ist 3-Aminomethyl-3,5,5-trimethylcyclohexanol, 2-(2-Aminoethoxy)ethanol, N-Methyl-1,3-propandiamin, N-Ethyl-1,3-propandiamin, N-Cyclohexyl-1,3-propandiamin, Bis(hexamethylen)triamin, Diethylentriamin, Dipropylentriamin oder N-(2-Aminoethyl)-1,3-propandiamin.

Ein bevorzugter Aldehyd der Formel (IV) ist ein Aldehyd der Formel (IVa), wobei R die bereits beschriebenen Bedeutungen aufweist.

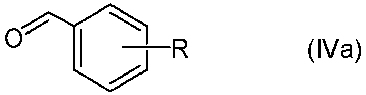

Ein besonders bevorzugter Aldehyd der Formel (IV) ist ein Aldehyd der Formel (IVb), wobei R¹ und R² die bereits beschriebenen Bedeutungen aufweisen.

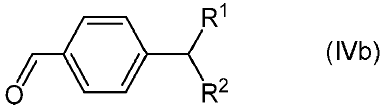

Als Aldehyd der Formel (IV) insbesondere bevorzugt sind 4-Decylbenzaldehyde, 4-Undecylbenzaldehyde, 4-Dodecylbenzaldehyde, 4-Tridecylbenzaldehyde oder 4-Tetradecylbenzaldehyde, bei welchen die Alkyl-Reste linear oder verzweigt, insbesondere verzweigt, sind.

Als Aldehyd der Formel (IV) am meisten bevorzugt ist ein Gemisch enthaltend 4-Decylbenzaldehyde, 4-Undecylbenzaldehyde, 4-Dodecylbenzaldehyde, 4-Tridecylbenzaldehyde und 4-Tetradecylbenzaldehyde, deren Alkyl-Reste mehrheitlich verzeigt sind.

Besonders bevorzugt ist das Aldimin der Formel (I) ausgewählt aus der Gruppe bestehend aus N,N'-Bis(4-alkylbenzyliden)-2-methyl-1,5-pentandiamin, N,N'-Bis(4-alkylbenzyliden)-1,6-hexandiamin, N,N'-Bis(4-alkylbenzyliden)-2,2(4),4-trimethyl-1,6-hexandiamin, N,N'-Bis(4-alkylbenzyliden)-1,2-cyclohexandiamin, N,N'-Bis(4-alkylbenzyliden)-3-aminomethyl-3,5,5-trimethylcyclohexylamin, N,N'-Bis(4-alkylbenzyliden)-4(2)-methyl-1,3-cyclohexandiamin, N,N'-Bis(4-alkylbenzyliden)-1,3-bis(aminomethyl)cyclohexan, N,N'-Bis(4-alkylbenzyliden)-1,4-bis(aminomethyl)cyclohexan, N,N'-Bis(4-alkylbenzyliden)-bis(4-aminocyclohexyl)methan, N,N'-Bis(4-alkylbenzyliden)-2,5(2,6)-bis(aminomethyl)bicyclo-[2.2.1]heptan, N,N'-Bis(4-alkylbenzyliden)-3(4),8(9)-bis(aminomethyl)tricyclo-[5.2.1.0^{2,6}]decan, N,N'-Bis(4-alkylbenzyliden)-1,3-Bis(aminomethyl)benzol, N,N'-Bis(4-alkylbenzyliden)-1,4-Bis(aminomethyl)benzol, N,N'-Bis(4-alkylbenzyliden)polyoxypropylendiamin mit einem mittleren Molekulargewicht im Bereich von 650 bis 2'500 g/mol, N,N',N"-Tris(4-alkylbenzyliden)polyoxypropylentriamin mit einem zahlenmittleren Molekulargewicht im Bereich von 1050 bis 5'800 g/mol, N-(4-Alkylbenzyliden)-3-aminomethyl-3,5,5-trimethylcyclohexanol, N-(4-Alkylbenzyliden)-2-(2-aminoethoxy)ethanol, N-(4-Alkylbenzyliden)-N'-methyl-1,3-propandiamin, N-(4-Alkylbenzyliden)-N'-ethyl-1,3-propandiamin, N-(4-Alkylbenzyliden)-N'-cyclohexyl-1,3-propandiamin, N,N"-Bis(4-alkylbenzyliden)-N'-(2-aminoethyl)ethan-1,2-diamin, N,N"-Bis(4-alkylbenzyliden)-N'-(3-aminopropyl)propan-1,3-diamin, N,N"-Bis(4-alkylbenzyliden)-N'-(2-aminoethyl)propan-1,3-diamin und N,N"-Bis(4-alkylbenzyliden)-N'-(6-aminohexyl)hexan-1,6-diamin, wobei Alkyl jeweils für einen linearen oder insbesondere verzweigten Decyl-, Undecyl-, Dodecyl-, Tridecyl- oder Tetradecyl-Rest steht.

Bevorzugt enthält die Zusammensetzung ein Gemisch aus Aldiminen der Formel (I), bei welchen Z jeweils für einen Rest der Formel (II) steht und R dabei ausgewählt ist aus Alkyl-Resten mit 6 bis 20 C-Atomen.

Besonders bevorzugt enthält die Zusammensetzung ein Gemisch aus Aldiminen der Formel (I), bei welchen Z jeweils für einen Rest der Formel (II) steht und R dabei ausgewählt ist aus linearen oder insbesondere verzweigten Decyl-, Undecyl-, Dodecyl-, Tridecyl- und Tetradecyl-Resten.

Ein solches Gemisch ist technisch besonders einfach zugänglich.

In der Zusammensetzung stammen von der Anzahl der gegenüber Isocyanatgruppen reaktiven Gruppen bevorzugt 1 bis 70%, insbesondere 2 bis 50%, aus Aldiminen der Formel (I).

Die erste Komponente der Zusammensetzung enthält mindestens ein Polyol. Als Polyol geeignet sind handelsübliche Polyole, insbesondere
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder mehreren aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2-oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere solchen aus Acrylnitril, Styrol, α-Methylstyrol, Methyl(meth)acrylat oder Hydroxyethyl(meth)acrylat, oder aus Polyharnstoff bzw. Polyhydrazodicarbonamid (PHD) oder aus Polyurethan, wobei die beiden Phasen eine stabile, lagerfähige Dispersion bilden und das Polymer partiell auf das Polyetherpolyol gepfropft beziehungsweise kovalent ans Polyetherpolyol gebunden sein kann. Bevorzugt sind Polyetherpolyole mit darin dispergierten Styrol-Acrylnitril-Partikeln (SAN) oder Polyharnstoff- bzw. Polyhydrazodicarbonamid-Partikeln (PHD). Bevorzugte Polyetherpolyole sind Polyoxypropylendiole oder Polyoxypropylentriole, oder sogenannte Ethylenoxid-terminierte (EO-endcapped) Polyoxypropylendiole oder -triole. Letztere sind Polyoxyethylen-polyoxypropylen-Mischpolyole, die insbesondere dadurch erhalten werden, dass Polyoxypropylendiole oder -triole nach Abschluss der Polypropoxylierungsreaktion mit Ethylenoxid weiter alkoxyliert werden und dadurch schliesslich primäre Hydroxylgruppen aufweisen. Bevorzugte Polyetherpolyole weisen einen Ungesättigtheitsgrad von weniger als 0.02 mEq/g, insbesondere weniger als 0.01 mEq/g auf.
- Polyesterpolyole, insbesondere aus der Polykondensation von Hydroxycarbonsäuren oder insbesondere solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie insbesondere Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure oder Trimellithsäureanhydrid, oder Mischungen der vorgenannten Säuren, sowie Polyesterpolyole aus Lactonen wie insbesondere ε-Caprolacton und Startern wie den vorgenannten zwei- oder dreiwertigen Alkoholen. Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} CTBN oder CTBNX oder ETBN von Emerald Performance Materials) hergestellt werden können; sowie hydrierte polyhydroxyfunktionelle Polymere oder Copolymere von Dienen.

Als Polyol bevorzugt sind Polyetherpolyole, Polyesterpolyole, Polycarbonatpolyole, Poly(meth)acrylatpolyole oder Polybutadienpolyole.

Besonders bevorzugt sind Polyetherpolyole, insbesondere Polyoxypropylenpolyole und/oder Ethylenoxid-terminierte Polyoxypropylenpolyole. Diese Polyole ermöglichen gute mechanische Eigenschaften, insbesondere eine gute Elastizität in einem grossen Temperaturbereich.

Am meisten bevorzugt sind Ethylenoxid-terminierte Polyoxypropylenpolyole. Diese Polyole sind kaum hydrophil und ihre Hydroxylgruppen sind sehr reaktiv.

Als Polyol bevorzugt sind auch Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD).

Bevorzugt weist das Polyol ein zahlenmittleres Molekulargewicht im Bereich von 400 bis 10'000 g/mol, insbesondere 500 bis 6'000 g/mol, auf.

Bevorzugt weist das Polyol eine mittlere OH-Funktionalität im Bereich von 1.6 bis 3, insbesondere 1.8 bis 3, besonders bevorzugt 2.2 bis 3, auf.

Bevorzugt weist das Polyol zumindest teilweise primäre Hydroxylgruppen auf. Solche Hydroxylgruppen sind mit Isocyanaten besonders reaktiv.

Die erste Komponente enthält bevorzugt 10 bis 90 Gewichts-%, insbesondere 20 bis 80 Gewichts-%, Polyole.

Die zweite Komponente der Zusammensetzung enthält mindestens ein Polyisocyanat.

Geeignete Polyisocyanate sind insbesondere
- aliphatische, cycloaliphatische oder arylaliphatische Di- oder Triisocyanate, bevorzugt 1,4-Tetramethylendiisocyanat, 2-Methylpentamethylen-1,5-diisocyanat, 1,6-Hexamethylendiisocyanat (HDI), 2,2,4- und/oder 2,4,4-Trimethyl-1,6-hexamethylendiisocyanat (TMDI), 1,10-Decamethylendiisocyanat, 1,12-Dodecamethylendiisocyanat, Lysin- oder Lysinesterdiisocyanat, Cyclohexan-1,3- oder -1,4-diisocyanat, 1-Methyl-2,4- und/oder -2,6-diisocyanatocyclohexan (H₆TDI), 1-Isocyanato-3,3,5-trimethyl-5-isocyanatomethylcyclohexan (IPDI), Perhydro-2,4'- und/oder -4,4'-diphenylmethandiisocyanat (H₁₂MDI), 1,3- oder 1,4-Bis-(isocyanatomethyl)cyclohexan, m- oder p-Xylylendiisocyanat, Tetramethyl-1,3- oder -1,4-xylylendiisocyanat, 1,3,5-Tris-(isocyanatomethyl)benzol, Bis-(1-Isocyanato-1-methylethyl)naphthalin, Dimer- oder Trimerfettsäureisocyanate wie insbesondere 3,6-Bis-(9-isocyana-tononyl)-4,5-di(1-heptenyl)cyclohexen (Dimeryldiisocyanat); insbesondere H₁₂MDI oder HDI oder IPDI;
- aromatische Di- oder Triisocyanate, bevorzugt 4,4'- oder 2,4'- oder 2,2'-Diphenylmethandiisocyanat oder beliebigen Gemischen dieser Isomeren (MDI), 2,4- oder 2,6-Toluylendiisocyanat oder beliebige Gemische dieser Isomeren (TDI), Gemische aus MDI und MDI-Homologen (polymeres MDI oder PMDI), 1,3- oder 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Tris-(4-isocyanatophenyl)methan oder Tris-(4-isocyanatophenyl)thiophosphat; insbesondere MDI oder TDI;
- Oligomere oder Derivate der genannten Di- oder Triisocyanate, insbesondere abgeleitet von HDI, IPDI, MDI oder TDI, insbesondere Oligomere enthaltend Uretdion- oder Isocyanurat- oder Iminooxadiazindion-Gruppen oder verschiedene dieser Gruppen; oder zwei- oder mehrwertige Derivate enthaltend Ester- oder Harnstoff- oder Urethan- oder Biuret- oder Allophanat- oder Carbodiimid- oder Uretonimin- oder Oxadiazintrion-Gruppen oder verschiedene dieser Gruppen. Solche Polyisocyanate stellen in der Praxis üblicherweise Gemische von Substanzen mit unterschiedlichen Oligomerisierungsgraden und/oder chemischen Strukturen dar. Insbesondere weisen sie eine mittlere NCO-Funktionalität von 2.1 bis 4.0 auf.
- Isocyanatgruppen-haltige Polyurethanpolymere aus der Umsetzung von Po-lyolen mit Polyisocyanaten, wie nachfolgend beschrieben.

Ein geeignetes Isocyanatgruppen-haltiges Polyurethanpolymer wird insbesondere erhalten aus der Umsetzung von mindestens einem Polyol mit einer überstöchiometrischen Menge von mindestens einem Polyisocyanat, insbesondere einem Diisocyanat. Die Umsetzung wird bevorzugt unter Feuchtigkeitsausschluss bei einer Temperatur im Bereich von 50 bis 160°C durchgeführt, gegebenenfalls in Anwesenheit geeigneter Katalysatoren. Der Überschuss an Polyisocyanat wird bevorzugt so gewählt, dass im Polyurethanpolymer nach der Umsetzung aller Hydroxylgruppen ein Gehalt an freien Isocyanatgruppen im Bereich von 1 bis 30 Gewichts-%, bevorzugt 1.5 bis 25 Gewichts-%, besonders bevorzugt 2 bis 20 Gewichts-%, bezogen auf das gesamte Polymer, verbleibt. Gegebenenfalls kann das Polyurethanpolymer unter Mitverwendung von Weichmachern oder Lösemitteln hergestellt werden, wobei die verwendeten Weichmacher oder Lösemittel keine gegenüber Isocyanaten reaktive Gruppen enthalten.

Das Isocyanatgruppen-haltige Polyurethanpolymer weist bevorzugt ein zahlenmittleres Molekulargewicht im Bereich von 350 bis 6'000 g/mol auf.

Als Polyisocyanat zur Herstellung eines Isocyanatgruppen-haltigen Polyurethanpolymers bevorzugt sind die genannten Diisocyanate, insbesondere MDI, TDI, IPDI, HDI oder H₁₂MDI.

Geeignete Polyole sind insbesondere die als Bestandteil der ersten Komponente genannten Polyole. Geeignet sind insbesondere auch Mischungen von Polyolen.

Bevorzugt sind Polyetherpolyole, Polyesterpolyole, Polycarbonatpolyole, Poly-(meth)acrylatpolyole oder Polybutadienpolyole.

Besonders bevorzugt sind Polyetherpolyole, Polyesterpolyole, insbesondere aliphatische Polyesterpolyole, oder Polycarbonatpolyole, insbesondere aliphatische Polycarbonatpolyole.

Am meisten bevorzugt sind Polyetherpolyole, insbesondere Polyoxypropylendi- oder -triole oder Ethylenoxid-terminierte Polyoxypropylendi- oder -triole. Bevorzugt sind Polyole mit einem zahlenmittleren Molekulargewicht im Bereich von 400 bis 10'000 g/mol, insbesondere von 500 bis 6'000 g/mol.

Bevorzugt sind Polyole mit einer mittleren OH-Funktionalität im Bereich von 1.6 bis 3.

Bevorzugt sind bei Raumtemperatur flüssige Polyole.

Bei der Herstellung eines Isocyanatgruppen-haltigen Polyurethanpolymers kann mindestens ein zwei- oder mehrfunktioneller Alkohol wie die bereits genannten mitverwendet werden.

Als Polyisocyanat bevorzugt ist HDI, IPDI, H₁₂MDI, TDI, MDI oder Oligomere oder Isocyanatgruppen-haltige Polyurethanpolymere dieser Diisocyanate oder Mischungen davon.

Bevorzugt ist das Polyisocyanat ausgewählt aus der Gruppe bestehend aus bei Raumtemperatur flüssigen Formen von MDI oder PMDI; Isocyanatgruppen-haltigen Polyurethanpolymeren basierend auf HDI oder IPDI oder TDI oder MDI; und Oligomeren von HDI oder IPDI oder TDI.

Bevorzugt sind auch Kombinationen aus zwei oder mehr dieser Polyisocyanate.

Eine bei Raumtemperatur flüssige Form von MDI stellt entweder durch partielle chemische Modifizierung - insbesondere Carbodiimidisierung bzw. Uretoniminbildung oder Adduktbildung mit Polyolen - verflüssigtes 4,4'-MDI dar, oder es ist ein durch Abmischen gezielt herbeigeführtes oder durch den Herstellungsprozess bedingtes Gemisch von 4,4'-MDI mit anderen MDI-Isomeren (2,4'-MDI und/oder 2,2'-MDI), und/oder MDI-Oligomeren und/oder MDI-Homologen (PMDI).

Die Zusammensetzung kann zusätzlich weitere Inhaltsstoffe enthalten.

Die erste Komponente enthält gegebenenfalls weitere mit Isocyanaten reaktive Verbindungen, insbesondere zwei- oder mehrfunktionelle Alkohole, Polyphenole, Polythiole, Polyamine, Aminoalkohole oder latente Härter wie Enamine, Ketimine, Oxazolidine oder nicht der Formel (I) entsprechende Aldimine.

In einer bevorzugten Ausführungsform enthält die erste Komponente zusätzlich mindestens einen Kettenverlängerer in Form eines Diols mit zwei primären Hydroxylgruppen und einem zahlenmittleren Molekulargewicht im Bereich von 60 bis 150 g/mol, insbesondere 1,2-Ethandiol, 1,3-Propandiol, 2-Methyl-1,3-propandiol, 1,4-Butandiol, 1,5-Pentandiol, Neopentylglykol, 1,6-Hexandiol, 3-Methyl-1,5-pentandiol, 1,7-Heptandiol, 1,8-Octandiol, 1,3-Cyclohexandimethanol, 1,4-Cyclohexandimethanol, Diethylenglykol oder Triethylenglykol.

Das Diol bildet mit dem Polyisocyanat im ausgehärteten Material sogenannte Hartsegmente und ermöglicht dadurch ausgehärtete Zusammensetzungen mit besonders hohen Festigkeiten.

Bevorzugt ist das Diol ausgewählt aus der Gruppe bestehend aus 1,2-Ethandiol, 1,3-Propandiol, 1,4-Butandiol, 1,5-Pentandiol, 1,6-Hexandiol, 1,4-Cyclohexandimethanol und Diethylenglykol. Diese Diole sind gut erhältlich und weisen primäre, sterisch kaum gehinderte Hydroxygruppen auf, welche mit Isocyanatgruppen besonders reaktiv sind.

Davon bevorzugt sind 1,3-Propandiol, 1,4-Butandiol oder 1,5-Pentandiol. Diese Diole sind linear und ergeben somit besonders hohe Festigkeiten. Zudem sind sie besonders gut handhabbar, da sie kaum hydrophil und bei Raumtemperatur flüssig sind.

Besonders bevorzugt ist 1,4-Butandiol.

Bevorzugt liegt das Diol in der ersten Komponente in einer solchen Menge vor, dass das Verhältnis der Anzahl OH-Gruppen des Diols zur Anzahl OH-Gruppen des Polyols im Bereich von 1 bis 50, bevorzugt 2 bis 20, insbesondere 2 bis 10, liegt.

Die Zusammensetzung kann weitere zwei- oder mehrfunktionelle Alkohole enthalten, wie insbesondere 1,2-Propandiol, 1,2-Butandiol, 1,3-Butandiol, 1,3-Pentandiol, Dibromneopentylglykol, 1,2-Hexandiol, 1,2-Octandiol, 2-Ethyl-1,3-hexandiol, Dipropylenglykol, Tripropylenglykol, ethoxyliertes Bisphenol-A, propoxyliertes Bisphenol-A, Cyclohexandiol, hydriertes Bisphenol-A, Dimerfettsäurealkohole, 1,1,1-Trimethylolethan, 1,1,1-Trimethylolpropan, Glycerin, Pentaerythritol, Zuckeralkohole wie insbesondere Xylit, Sorbit oder Mannit oder Zucker wie insbesondere Saccharose oder alkoxylierte Derivate der genannten Alkohole oder Mischungen der genannten Alkohole.

In einer weiteren bevorzugten Ausführungsform enthält die erste Komponente zusätzlich mindestens ein primäres Polyamin wie insbesondere 4(2)-Methyl-1,3-phenylendiamin (TDA), 3,5-Diethyl-2,4(6)-toluylendiamin (DETDA), 3,5-Di-methylthio-2,4(6)-toluylendiamin, 4,4'-Diaminodiphenylmethan (MDA), 3,3',5,5'-Tetraethyl-4,4'-diaminodiphenylmethan (M-DEA), 1,5-Diamino-2-methylpentan (MPMD), 2,2(4),4-Trimethylhexamethylendiamin (TMD), 1,2-Diaminocyclohexan, Bis(4-aminocyclohexyl)methan, 1-Amino-3-aminomethyl-3,5,5-trimethylcyclohexan (= Isophorondiamin oder IPDA), 4(2)-Methyl-1,3-cyclohexandiamin, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 1,3-Bis(aminomethyl)benzol (MXDA), 1,4-Bis(aminomethyl)benzol oder Polyoxyalkylenpolyamine mit einem mittleren Molekulargewicht im Bereich von 200 bis 500 g/mol, insbesondere die Jeffamine^{®}-Typen D-230, D-400 oder T-403 (alle von Huntsman).

Bei der Mitverwendung eines solchen primäres Polyamins kann dieses insbesondere die Fliesseigenschaften der Zusammensetzung beim Vermischen der beiden Komponenten unmittelbar derart verändern, dass ein strukturviskoses, weniger stark abfliessendes oder abrutschendes Material entsteht. Dies wird auch als "in situ-Thixotropie" bezeichnet.

In einer weiteren bevorzugten Ausführungsform enthält die erste Komponente zusätzlich Wasser, insbesondere in einer solchen Menge, dass die erste Komponente bis zu 2 Gewichts-%, insbesondere bis zu 1 Gewichts-%, Wasser enthält. Bevorzugt ist das Wasser an ein Trägermaterial gebunden. Durch die Anwesenheit von Wassser in der Zusammensetzung wird die Hydrolyse der Aldiminogruppen erleichtert bzw. erfolgt sie weitgehend unabhängig von der Diffusion von Wasser in die vermischte, applizierte Zusammensetzung aus der Umgebung, wodurch die Aushärtung rascher erfolgt. Als Trägermaterial eignen sich insbesondere feinteilige Zeolithe, Aluminiumoxide, Tone, Kreiden, Zellulose- oder Stärkepulver, pyrogene Kieselsäuren oder ionische Polymere.

Bevorzugt enthält die Zusammensetzung zusätzlich einen oder mehrere weitere Bestandteile, welche insbesondere ausgewählt sind aus Katalysatoren, Füllstoffen, Weichmachern und Lösemitteln.

Solche Bestandteile können in der ersten oder in der zweiten oder in beiden Komponenten vorhanden sein.

Bevorzugt enthält die Zusammensetzung mindestens einen Katalysator, insbesondere mindestens einen Katalysator für die Hydrolyse von Aldiminogruppen und/oder mindestens einen Katalysator für die Reaktion von Hydroxylgruppen mit Isocyanatgruppen.

Besonders bevorzugt enthält die Zusammensetzung sowohl mindestens einen Katalysator für die Hydrolyse von Aldiminogruppen als auch mindestens einen Katalysator für die Reaktion von Hydroxylgruppen mit Isocyanatgruppen.

Geeignete Katalysatoren für die Hydrolyse der Aldiminogruppen sind insbesondere organische Säuren, insbesondere Carbonsäuren wie 2-Ethylhexansäure, Laurinsäure, Stearinsäure, Isostearinsäure, Ölsäure, Neodecansäure, Benzoesäure, Salicylsäure oder 2-Nitrobenzoesäure, organische Carbonsäureanhydride wie Phthalsäureanhydrid, Hexahydrophthalsäureanhydrid oder Hexahydromethylphthalsäureanhydrid, Silylester von Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester. Besonders bevorzugt sind Carbonsäuren, insbesondere aromatische Carbonsäuren wie Benzoesäure, 2-Nitrobenzoesäure oder insbesondere Salicylsäure.

Geeignete Katalysatoren für die Reaktion von Hydroxylgruppen mit Isocyanatgruppen sind insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Verbindungen von Eisen(III), Bismut(III) oder Zirkonium(IV), insbesondere Komplexverbindungen, oder Stickstoff-haltige Verbindungen wie insbesondere 1,4-Diazabicyclo[2.2.2]octan (DABCO), 1,8-Di-azabicyclo[5.4.0]undec-7-en (DBU) oder 1,5-Diazabicyclo[4.3.0]non-5-en (DBN).

Insbesondere ist der Katalysator für die Reaktion von Hydroxylgruppen mit Isocyanatgruppen ausgewählt aus der Gruppe bestehend aus Bismut(III)-Komplexverbindungen und Zirkonium(IV)-Komplexverbindungen, wobei die Liganden insbesondere ausgewählt sind aus Alkoholaten, Carboxylaten, 1,3-Diketonaten, Oxinat, 1,3-Ketoesteraten und 1,3-Ketoamidaten.

Mit einem solchen Katalysator ist die Zusammensetzung lagerstabil und verfügt über eine lange Offenzeit bei schnellerAushärtung, wobei ein blasenfreies Material mit guten mechanischen Eigenschaften entsteht.

Geeignete Liganden für Komplexverbindungen sind insbesondere
- Alkoholate, insbesondere Methanolat, Ethanolat, Propanolat, Isopropanolat, Butanolat, tert.Butanolat, Isobutanolat, Pentanolat, Neopentanolat, Hexanolat oder Octanolat;
- Carboxylate, insbesondere Formiat, Acetat, Propionat, Butanoat, Isobutanoat, Pentanoat, Hexanoat, Cyclohexanoat, Heptanoat, Octanoat, 2-Ethylhexanoat, Nonanoat, Decanoat, Neodecanoat, Undecanoat, Dodecanoat, Lactat, Oleat, Citrat, Benzoat, Salicylat oder Phenylacetat;
- 1,3-Diketonate, insbesondere Acetylacetonat (2,4-Pentandionat), 2,2,6,6-Tetramethyl-3,5-heptandionat, 1,3-Diphenyl-1,3-propandionat (Dibenzoylmethanat), 1-Phenyl-1,3-butanandionat oder 2-Acetylcyclohexanonat;
- Oxinat;
- 1,3-Ketoesterate, insbesondere Methylacetoacetat, Ethylacetoacetat, Ethyl-2-methylacetoacetat, Ethyl-2-ethylacetoacetat, Ethyl-2-hexylacetoacetat, Ethyl-2-phenylacetoacetat, Propylacetoacetat, Isopropylacetoacetat, Butylacetoacetat, tert.Butylacetoacetat, Ethyl-3-oxo-valerat, Ethyl-3-oxo-hexanoat oder 2-Oxo-cyclohexancarbonsäureethylesterat; und
- 1,3-Ketoamidate, insbesondere N,N-Diethyl-3-oxo-butanamidat, N,N-Dibutyl-3-oxo-butanamidat, N,N-Bis(2-ethylhexyl)-3-oxo-butanamidat, N,N-Bis(2-methoxyethyl)-3-oxo-butanamidat, N,N-Dibutyl-3-oxo-heptanamidat, N,N-Bis(2-methoxyethyl)-3-oxo-heptanamidat, N,N-Bis(2-ethylhexyl)-2-oxo-cyclo-pentancarboxamidat, N,N-Dibutyl-3-oxo-3-phenylpropanamidat, N,N-Bis(2-methoxyethyl)-3-oxo-3-phenylpropanamidat oder N-Polyoxyalkylen-1,3-ketoamidate wie insbesondere Acetoamidate von Polyoxyalkylenaminen mit ein, zwei oder drei Aminogruppen und einem Molekulargewicht bis 5000 g/mol, insbesondere den von Huntsman unter dem Handelsnamen Jeffamine^{®} erhältlichen Typen SD-231, SD-401, SD-2001, ST-404, D-230, D-400, D-2000, T-403, M-600 und XTJ-581.

Besonders bevorzugte Bismut(III)-Komplexverbindungen sind ausgewählt aus der Gruppe bestehend aus Bismut(III)tris(acetat), Bismut(III)tris(octanoat), Bismut(III)tris(2-ethylhexanoat), Bismut(III)tris(neodecanoat), Bismut(III)bis(neodecanoat)oxinat, Bismut(III)neodecanoat-bis(oxinat), Bismut(III)-ris(N,N-diethyl-3-oxo-butanamidat) und Bismut(III)-Komplexverbindungen mit verschiedenen dieser genannten Liganden.

Besonders bevorzugte Zirkonium(IV)-Komplexverbindungen sind ausgewählt aus der Gruppe bestehend aus Zirkonium(IV)tetrakis(acetat), Zirkonium(IV)tetrakis(octanoat), Zirkonium(IV)tetrakis(2-ethylhexanoat), Zirkonium(IV)tetrakis-(neodecanoat), Zirkonium(IV)tetrakis(acetylacetonat), Zirkonium(IV)tetrakis-(1,3-diphenylpropan-1,3-dionat), Zirkonium(IV)tetrakis(ethylacetoacetat), Zirkonium(IV)tetrakis(N,N-diethyl-3-oxo-butanamidat) und Zirkonium(IV)-Komplexverbindungen mit verschiedenen dieser genannten Liganden.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat (DINCH), Terephthalate, insbesondere Dioctylterephthalat, Trimellitate, Adipate, insbesondere Dioctyladipat, Azelate, Sebacate, Benzoate, Glykolether, Glykolester, organische Phosphor- oder Sulfonsäureester, Polybutene, Polyisobutene oder von natürlichen Fetten oder Ölen abgeleitete Weichmacher, insbesondere epoxidiertes Soja- oder Leinöl.

Geeignete Lösemittel sind insbesondere Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Butylacetat, n-Butylpropionat, Diethylmalonat, 1-Methoxy-2-propylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Toluol, Xylol, Heptan, Octan, Naphtha, White Spirit, Petrolether oder Benzin, insbesondere Solvesso^{™}-Typen (von Exxon), weiterhin Methylenchlorid, Propylencarbonat, Butyrolacton, N-Methylpyrrolidon oder N-Ethylpyrrolidon.

Die Zusammensetzung kann weitere für Polyurethanzusammensetzungen gebräuchliche Zusätze enthalten. Insbesondere können die folgenden Hilfs- und Zusatzstoffe vorhanden sein:
- anorganische oder organische Pigmente, insbesondere Titandioxid, Chromoxide oder Eisenoxide;
- Fasern, insbesondere Glasfasern, Kohlefasern, Metallfasern, Keramikfasern, Kunststofffasern wie Polyamidfasern oder Polyethylenfasern oder Naturfasern wie Wolle, Cellulose, Hanf oder Sisal;
- Farbstoffe;
- Trocknungsmittel, insbesondere Molekularsiebpulver, Calciumoxid, hochreaktive Isocyanate wie p-Tosylisocyanat, monomere Diisocyanate, Mono-Oxazolidine wie Incozol^{®} 2 (von Incorez) oder Orthoameisensäureester;
- Haftvermittler, insbesondere Organoalkoxysilane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane, oder oligomere Formen dieser Silane, oder Titanate;
- latente Härter oder Vernetzer, insbesondere nicht der Formel (I) entsprechende Aldimine oder Ketimine, Enamine oder Oxazolidine;
- weitere Katalysatoren, welche die Reaktion der Isocyanatgruppen beschleunigen, insbesondere Salze, Seifen oder Komplexe von Zinn, Zink, Bismut, Eisen, Aluminium, Molybdän, Dioxomolybdän, Titan, Zirkonium oder Kalium, insbesondere Zinn(II)-2-ethylhexanoat, Zinn(II)-neodecanoat, Zink(II)-acetat, Zink(II)-2-ethylhexanoat, Zink(II)-laurat, Zink(II)-acetylacetonat, Aluminiumlactat, Aluminiumoleat, Diisopropoxytitan-bis-(ethylacetoacetat) oder Kaliumacetat; tertiäre Aminogruppen enthaltende Verbindungen, insbesondere 2,2'-Dimorpholinodiethylether, N-Ethyldiisopropylamin, N,N,N',N'-Tetramethylalkylendiamine, Pentamethylalkylentriamine und höhere Homologe davon, Bis-(N,N-diethylaminoethyl)adipat, Tris(3-dimethylaminopropyl)amin, N-Alkylmorpholine, N,N'-Dimethylpiperazin; stickstoffaromatische Verbindungen wie 4-Dimethylamino-pyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen; sowie Kombinationen der genannten Verbindungen, insbesondere von Metallverbindungen und Stickstoff-haltigen Verbindungen;
- Rheologie-Modifizierer, insbesondere Verdickungsmittel, insbesondere Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether oder hydrophob modifizierte Polyoxyethylene;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- oder Tris(isopropylphenyl)phosphate unterschiedlichen Isopropylierungsgrades, Resorcinolbis(diphenylphosphat), Bisphenol-A-bis(diphenylphosphat) oder Ammoniumpolyphosphate;
- Additive, insbesondere Netzmittel, Verlaufmittel, Entschäumer, Entlüfter, Stabilisatoren gegen Oxidation, Wärme, Licht oder UV-Strahlung oder Biozide;
oder weitere üblicherweise in Polyurethanzusammensetzungen eingesetzte Substanzen.

Es kann sinnvoll sein, gewisse Substanzen vor dem Einmischen in die Zusammenetzung chemisch oder physikalisch zu trocknen.

Die erste und die zweite Komponente der Zusammensetzung werden getrennt voneinander hergestellt. Dabei werden die Bestandteile der jeweiligen Komponente unter Ausschluss von Feuchtigkeit miteinander vermischt. Jede Komponente wird in einem separaten feuchtigkeitsdichten Gebinde gelagert. Ein geeignetes feuchtigkeitsdichtes Gebinde besteht insbesondere aus einem gegebenenfalls beschichteten Metall und/oder Kunststoff und stellt insbesondere ein Fass, ein Container, ein Hobbock, ein Eimer, eine Büchse, ein Beutel, ein Schlauchbeutel, ein Kanister, eine Kartusche, eine Tube oder eine Flasche dar.

Zur Anwendung der Zusammensetzung werden die beiden Komponenten kurz vor oder während der Applikation mit einer geeigneten Methode miteinander vermischt. Das Mischungsverhältnis wird bevorzugt so gewählt, dass die gegenüber Isocyanaten reaktiven Gruppen in einem geeigneten Verhältnis zu den Isocyanatgruppen stehen.

Dabei liegt das Verhältnis der mit Isocyanaten reaktiven Gruppen wie insbesondere Hydroxylgruppen, Aldiminogruppen und primäre und sekundäre Aminogruppen zu den Isocyanatgruppen bevorzugt im Bereich von 0.5 bis 1.1, besonders bevorzugt 0.7 bis 1.05, insbesondere 0.8 bis 1.0, am meisten bevorzugt bei etwa 0.95.

In Gewichtsteilen liegt das Mischungsverhältnis zwischen der ersten und der zweiten Komponente typischerweise im Bereich von etwa 1:2 bis 20:1, insbesondere 1:1 bis 10:1.

Eine geeignete Methode zum Vermischen der beiden Komponenten ist abhängig von Konsistenz, Viskosität und Reaktivität der beiden Komponenten und von der Anwendung. Gut fliessfähige Komponenten können beispielsweise mit einem geeigneten Rührwerk, beispielsweise einem Doppelwellenmischer, vermischt werden, wobei die einzelnen Komponenten im richtigen Mischungsverhältnis vorkonfektioniert sein können. Ebenfalls möglich ist das Vermischen der beiden Komponenten über einen Statikmischer oder mit Hilfe von dynamischen Mischern, beispielsweise maschinell mittels einer Zweikomponenten-Dosieranlage. Das Vermischen kann kontinuierlich oder batchweise erfolgen. Beim Mischen ist darauf zu achten, dass die zwei Komponenten möglichst homogen vermischt werden. Bei einer unzureichenden Vermischung treten lokale Abweichungen vom vorteilhaften Mischungsverhältnis auf, was sich in einer Verschlechterung der mechanischen Eigenschaften und/oder Blasenbildung auswirken kann.

Das Vermischen erfolgt bevorzugt bei Umgebungstemperatur, insbesondere im Bereich von etwa 0 bis 50°C, insbesondere 10 bis 40°C.

Wird vor der Applikation vermischt, so wird darauf geachtet, dass zwischen dem Vermischen der Komponenten und der Applikation nicht zu viel Zeit vergeht, damit es nicht zu Störungen wie beispielsweise einem schlechten Verlauf oder einem verlangsamten oder unvollständigen Aufbau der Haftung zum Substrat kommt. Insbesondere soll die Offenzeit der Zusammensetzung während der Applikation nicht überschritten werden.

Als "Offenzeit" wird die Zeitspanne bezeichnet, während der die Zusammensetzung verarbeitet oder nachbearbeitet werden kann, nachdem der Aushärtungsprozess begonnen hat.

Die Zeit bis zur Ausbildung einer Haut ("Hautbildungszeit") bzw. bis zur Klebefreiheit ("tack-free time") stellt dabei ein Mass für die Offenzeit dar.

Mit dem Vermischen der beiden Komponenten beginnt der Prozess der Aushärtung. Als Ergebnis davon entsteht die ausgehärtete Zusammensetzung. Die Aushärtung erfolgt bevorzugt ebenfalls bei Umgebungstemperatur.

Bei der Aushärtung reagieren die Aldiminogruppen des Aldimins der Formel (I) unter dem Einfluss von Feuchtigkeit mit vorhandenen Isocyanatgruppen. Die Hydroxylgruppen und gegebenenfalls vorhandene primäre oder sekundäre Aminogruppen reagieren mit weiteren Isocyanatgruppen. Gegebenenfalls vorhandene weitere Isocyanatgruppen reagieren unter dem Einfluss von Feuchtigkeit untereinander. Die Gesamtheit dieser zur Aushärtung der Zusammensetzung führenden Reaktionen wird auch als Vernetzung bezeichnet.

Die zur Reaktion der Aldiiminogruppen benötigte Feuchtigkeit kann, zumindest teilweise, in der Zusammensetzung vorhanden sein, und/oder sie kann durch Diffusion aus der Umgebung, insbesondere aus der Luft (Luftfeuchtigkeit) oder aus den Substraten, in die Zusammensetzung gelangen.

Bei der Vernetzung wird ein Aldehyd der Formel (IV) freigesetzt. Dieser ist weitgehend unflüchtig und geruchlos und verbleibt zum grössten Teil in der ausgehärteten Zusammensetzung. Dort verhält er sich bzw. wirkt wie ein Weichmacher. Als solcher kann er grundsätzlich selber migrieren und/oder die Migration von Weichmachern beeinflussen. Der Aldehyd der Formel (IV) ist mit der ausgehärteten Zusammensetzung sehr gut verträglich, migriert selber kaum und löst auch keine verstärkte Migration von Weichmachern aus.

Die Zusammensetzung verfügt über eine lange Offenzeit und eine überraschend schnelle Aushärtung ohne Geruchsimmissionen, wobei ein blasenfreies, elastisches Material mit nicht-klebriger Oberfläche und guter Festigkeit, Dehnbarkeit, Elastizität und Beständigkeit entsteht, welches nicht zu Problemen mit Weichmacher-Migration neigt.

Bevorzugt stellt die Zusammensetzung einen Klebstoff oder einen Dichtstoff oder eine Beschichtung dar.

Bevorzugt ist der Klebstoff oder der Dichtstoff oder die Beschichtung elastisch.

Als Klebstoff und/oder Dichtstoff ist die Zusammensetzung insbesondere geeignet für Klebe- und Abdichtungsanwendungen, insbesondere in der Bau- und Fertigungsindustrie oder im Fahrzeugbau, insbesondere für die Parkettverklebung, Anbauteilverklebung, Hohlraumversiegelung, Montage, Modulverklebung, Karosserieverklebung, Scheibenverklebung, Fugenabdichtung oder Verankerung.

Elastische Verklebungen im Fahrzeugbau sind beispielsweise das Ankleben von Teilen wie Kunststoffabdeckungen, Zierleisten, Flansche, Stosstangen, Führerkabinen oder andere Anbauteile, an die lackierte Karosserie eines Fahrzeugs, oder das Einkleben von Scheiben in die Karosserie, wobei die Fahrzeuge insbesondere Automobile, Lastkraftwagen, Busse, Schienenfahrzeuge oder Schiffe darstellen.

Als Dichtstoff ist die Zusammensetzung insbesondere geeignet für das elastische Abdichten von Fugen, Nähten oder Hohlräumen aller Art, insbesondere von Fugen am Bau wie Dilatationsfugen oder Anschlussfugen zwischen Bauteilen.

Als Beschichtung ist die Zusammensetzung geeignet zum Schutz von Böden oder Mauern, insbesondere als Beschichtung von Balkonen, Terrassen, Plätzen, Brücken, Parkdecks, oder zur Abdichtung von Dächern, insbesondere Flachdächern oder schwach geneigten Dachflächen oder Dachgärten, oder im Innern von Gebäuden zur Wasserabdichtung, beispielsweise unter Fliesen oder Keramikplatten in Nasszellen oder Küchen, oder als Bodenbelag in Küchen, Industriehallen oder Fabrikationsräumen, oder als Abdichtung in Auffangwannen, Kanälen, Schächten oder Abwasserbehandlungsanlagen, oder zum Schutz von Oberflächen als Lack oder Versiegelung, oder als Vergussmasse zur Hohlraumversiegelung, als Nahtabdichtung oder als Schutzbeschichtung für beispielsweise Rohre.

Sie kann auch zu Reparaturzwecken als Abdichtung oder Beschichtung verwendet werden, beispielsweise von undichten Dachmembranen oder nicht mehr tauglichen Bodenbelägen oder insbesondere als Reparaturmasse für hochreaktive Spritzabdichtungen.

Die Zusammensetzung kann so formuliert sein, dass sie eine pastöse Konsistenz mit strukturviskosen Eigenschaften aufweist. Eine solche Zusammensetzung wird mittels einer geeigneten Vorrichtung appliziert, beispielsweise aus handelsüblichen Kartuschen oder Fässern oder Hobbocks, beispielsweise in Form einer Raupe, wobei diese eine im Wesentlichen runde oder dreieckige Querschnittsfläche aufweisen kann.

Die Zusammensetzung kann weiterhin so formuliert sein, dass sie flüssig und sogenannt selbstverlaufend oder nur leicht thixotrop ist und zur Applikation ausgegossen werden kann. Als Beschichtung kann sie beispielsweise anschliessend flächig bis zur erwünschten Schichtdicke verteilt werden, beispielsweise mittels einer Rolle, einem Schieber, einer Zahntraufel oder einer Spachtel. Dabei wird in einem Arbeitsgang typischerweise eine Schichtdicke im Bereich von 0.5 bis 3 mm, insbesondere 1.0 bis 2.5 mm, aufgetragen.

Die Beschichtung wird insbesondere verwendet als elastische Flüssigfolie zur Bauwerksabdichtung.

Dabeit weist die Zusammensetzung eine Minute nach dem Vermischen bevorzugt eine Viskosität bei 25°C im Bereich von 0.5 bis 2 Pa·s, bevorzugt 0.5 bis 1.5 Pa·s, auf. So kann sie als Flüssigfolie sehr gut verarbeitet werden. Sie ist bevorzugt selbstnivellierend, d.h. sie verläuft selbständig zu einer ebenen Oberfläche, nachdem sie mittels Rolle, Zahntraufel, Stachelwalze oder dergleichen bearbeitet wurde.

In einem Arbeitsgang wird typischerweise eine Schichtdicke im Bereich von 0.5 bis 3 mm, insbesondere 1.0 bis 2.5 mm, aufgetragen. Die Zusammensetzung kann in einer oder mehreren Schichten aufgetragen werden.

Geeignete Substrate, welche mit der Zusammensetzung verklebt oder abgedichtet oder beschichtet werden können, sind insbesondere
- Glas, Glaskeramik, Beton, Mörtel, Faserzement, insbesondere Faserzement-Platten, Backstein, Ziegel, Gips, insbesondere Gips-Platten, oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Kupfer, Eisen, Stahl, Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Kunststoffe wie Hart- und Weich-PVC, Polycarbonat, Polyester, Polystyrol, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Farben oder Lacke, insbesondere Automobildecklacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Applikation und Aushärtung der Zusammensetzung wird ein Artikel erhalten, welcher mit der Zusammensetzung verklebt oder abgedichtet oder beschichtet ist. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, inbesondere ein Fenster, ein Rohr, ein Rotorblatt einer Windkraftanlage, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, oder ein Anbauteil davon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### verwendete Aldehyde:

| | |
|---|---|
| Aldehyd-1: | Fraktioniertes Reaktionsgemisch erhalten aus mittels HF-BF₃ katalysierter Formylierung von C₁₀₋₁₄-Alkylbenzol, enthaltend mehrheitlich verzweigte 4-(C₁₀₋₁₄-Alkyl)benzaldehyde. (mittleres Aldehyd-Equivalentgewicht 290 g/Eq) |

### 2,2-Dimethyl-3-lauroyloxypropanal

Aldehyd-1 ist ein Gemisch von Aldehyden der Formel (IV). 2,2-Dimethyl-3-lauroyloxypropanal dient als Vergleich.

### Herstellung von Aldiminen:

Die **Aminzahl** (inklusive Aldiminogruppen) wurde bestimmt mittels Titration (mit 0.1_{N} HClO₄ in Essigsäure gegen Kristallviolett).

Die **Viskosität** wurde mit einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.

### Aldimin A1:

50.00 g Aldehyd-1 wurden in einem Rundkolben unter Stickstoffatmosphäre vorgelegt. Unter Rühren wurden 13.93 g 3-Aminomethyl-3,5,5-trimethylcyclohexylamin zugegeben und anschliessend die flüchtigen Bestandteile bei 80 °C und 10 mbar Vakuum entfernt. Es wurde eine hellgelbe, geruchlose und pH-neutrale Flüssigkeit mit einer Viskosität bei 20 °C von 21.3 Pa·s und einer Aminzahl von 150.1 mg KOH/g erhalten.

### Aldimin A2:

50.00 g Aldehyd-1 wurden in einem Rundkolben unter Stickstoffatmosphäre vorgelegt. Unter Rühren wurden 13.58 g Hexan-1,6-diamin - Lösung (70 Gewichts-% in Wasser) zugegeben und anschliessend die flüchtigen Bestandteile bei 80 °C und 10 mbar Vakuum entfernt. Es wurde eine hellgelbe, geruchlose und pH-neutrale Flüssigkeit mit einer Viskosität bei 20 °C von 1.0 Pa·s und einer Aminzahl von 161.6 mg KOH/g erhalten.

### Aldimin A3:

50.00 g Aldehyd-1 wurden in einem Rundkolben unter Stickstoffatmosphäre vorgelegt. Unter Rühren wurden 11.14 g 1,3-Bis(aminomethyl)benzol zugegeben und anschliessend die flüchtigen Bestandteile bei 80°C und 10 mbar Vakuum entfernt. Es wurde eine blassgelbe, geruchlose und pH-neutrale Flüssigkeit mit einer Viskosität bei 20°C von 2.6 Pa·s und einer Aminzahl von 155.7 mg KOH/g erhalten.

### Aldimin R1:

48.92 2,2-Dimethyl-3-lauroyloxypropanal wurden in einem Rundkolben unter Stickstoffatmosphäre vorgelegt. Unter Rühren wurden 13.93 g 3-Aminomethyl-3,5,5-trimethylcyclohexylamin zugegeben und anschliessend die flüchtigen Bestandteile bei 80°C und 10 mbar Vakuum entfernt. Es wurde eine blassgelbe, geruchlose Flüssigkeit mit einer Aminzahl von 153.0 mg KOH/g erhalten.

Die Aldimine **A1** bis **A3** sind Aldimine der Formel (I). Aldimin **R1** dient als Vergleich.

Herstellung von zweikomponentigen Polyurethanzusammensetzungen

### Zusammensetzungen Z1 bis Z3 und Ref1:

Für jede Zusammensetzungen wurde eine erste **Komponente K1** hergestellt, indem
46.82 Gewichtsteile (GT) Voranol^{®} CP 4755 (EO-endcapped Polyoxypropylentriol, OH-Zahl 35.0 mg KOH/g, von Dow)
7.61 GT 1,4-Butandiol,
jeweils das in der Tabelle 1 angegebene Aldimin in der angegebenen Menge,
1.87 GT 1,3-Bis(aminomethyl)benzol,
35.18 GT calciniertes Kaolin,
3.74 GT Sylosiv^{®} A3 (Molekularsiebpulver, von Grace), und
0.09 GT Wasser
in einem Vakuumdissolver unter Feuchtigkeitsausschluss zu einer homogenen Paste verarbeitet und aufbewahrt wurden.

Weiterhin wurde für jede Zusammensetzung eine zweite **Komponente K2** hergestellt, indem
55.65 Gewichtsteile (GT) Polymer-1, dessen Herstellung nachfolgend beschrieben ist,
38.51 GT Desmodur^{®} CD (modifiziertes Diphenylmethandiisocyanat enthaltend MDI-Carbodiimid-Addukte, bei Raumemperatur flüssig, NCO-Gehalt 28 Gewichts-% von Covestro)
5.35 GT hydrophob modifizierte pyrogene Kieselsäure,
0.43 GT Lösung von 5 Gewichts-% Salicylsäure in Diisopropylphthalat, und
0.06 GT K-Kat^{®} A-209 (Zirkonium(IV)-Chelat-Komplex in Reaktivverdünner und tert.Butylacetat, von King Industries)
in einem Vakuumdissolver unter Feuchtigkeitsausschluss zu einer homogenen Paste verarbeitet und aufbewahrt wurden.

Das **Polymer-1** wurde hergestellt, indem 1300 g Acclaim^{®} 4200 (Polyoxypropylen-Diol, OH-Zahl 28.5 mg KOH/g, von Covestro), 2600 g Voranol^{®} CP 4755 (EO-endcapped Polyoxypropylentriol, OH-Zahl 35.0 mg KOH/g, von Dow), 600 g Desmodur^{®} 44 MC L (4,4'-Methylendiphenyldiisocyanat, von Covestro) und 500 g Diisodecylphthalat nach bekanntem Verfahren bei 80°C zu einem Isocyanatgruppen-haltigen Polyurethanpolymer mit einem Gehalt an freien Isocyanatgruppen von 2.1 Gewichts-% umgesetzt wurden.

Für die Verwendung wurden die beiden Komponenten im angegebenen Mischungsverhältnis **K1/K2** (in Gewichtsteilen, w/w) gemäss Tabelle 1 mittels einem SpeedMixer^{®} (DAC 150 FV, Hauschild) während 30 Sekunden zu einer homogenen Paste verarbeitet und diese unverzüglich folgendermassen geprüft:
Von jeder Zusammensetzung wurde ein Film von 2 mm Dicke hergestellt, während 7 Tagen im Normklima aushärten lassen und die mechanischen Eigenschaften **Zugfestigkeit, Bruchdehnung** und **E-Modul 5%** (bei 0.5-5 % Dehnung) gemäss DIN EN 53504 bei einer Zuggeschwindigkeit von 200 mm/min geprüft. Diese Resultate sind in der Tabelle 1 als "frisch" bezeichnet.

Als Mass für die Offenzeit wurde die Zeit bis zur Klebefreiheit **(tack-free time)** bestimmt. Dazu wurden einige Gramm der frisch vermischten Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben. Diese Resultate sind in der Tabelle 1 als "frisch" bezeichnet.

Die **Shore A-Härte** wurde bestimmt nach DIN 53505 an während der in der Tabelle 1 angegebenen Zeit im Normklima ausgehärteten Prüfkörpern. Weiterhin wurde von jeder Zusammensetzung die **Standfestigkeit** bestimmt. Dafür wurden 8 ml der frisch vermischten Masse aus einer vorne aufgeschnittenen handelsüblichen 10 ml Kunststoffspritze von oben auf ein Stück horizontal liegenden Pappkartons aufgetragen und dieses unverzüglich in senkrechte Lage gekippt, so dass die applizierte Zusammensetzung horizontal zu liegen kam. Anschliessend wurde das Ausmass des Abackens aus der horizontalen Lage nach unten während der Aushärtung im Normklima bewertet, wobei als "gut" ein Absacken von höchstens 20 mm, als "mässig-gut" ein Absacken von höchstens 30 mm und als "mässig" ein Absacken von höchstens 40 mm bewertet wurde. Diese Resultate sind in der Tabelle 1 als "frisch" bezeichnet. Schliesslich wurden dieselben Prüfungen für jede Zusammensetzung wiederholt, wobei die erste Komponente **K1** aber zuvor in einem feuchtigkeitsdichten Gebinde während 48 Stunden in einem Umluftofen bei 60°C gelagert wurde. Diese Resultate sind in der Tabelle 1 als "gelagert" bezeichnet.

Bei allen Zusammensetzungen war während und nach der Aushärtung durch Riechen mit der Nase im Abstand von 2 cm kein **Geruch** wahrnehmbar.

Die Resultate sind in der Tabelle 1 angegeben.

Die Zusammensetzungen **Z1** bis **Z3** sind erfindungsgemässe Beispiele. Die Zusammensetzung **Ref1** ist ein Vergleichsbeispiel.

Die Zusammensetzungen **Z1** bis **Z3** sind insbesondere geeignet als elastische Klebstoffe.

**Tabelle 1:**

| **Zusammensetzung** | | | **Ref1** | **Z1** | **Z2** | **Z3** |
|---|---|---|---|---|---|---|
| Aldimin | | | **R1** | **A1** | **A2** | **A3** |
| | | | 4.69 GT | 4.79 GT | 4.45 GT | 4.54 GT |
| Mischungsverhältnis K1/K2 (w/w) | | | 100/87 | 100/87 | 100/87 | 100/87 |
| **tack-free time** | | | | | | |
| | | *frisch,* | 42' | 35' | 27' | 35' |
| | | *gelagert* | 41' | 32' | 22' | 27' |
| **Standfestigkeit** | | | | | | |
| | | *frisch,* | mässig | mässig-gut | gut | gut |
| | | *gelagert* | mässig-gut | gut | gut | gut |
| **Shore A** *frisch* | | | | | | |
| | | nach 3h | 16 | 48 | 54 | 55 |
| | | nach 1d | 77 | 78 | 79 | 82 |
| | | nach 3d | 79 | 80 | 81 | 82 |
| **Shore A** *gelagert* | | | | | | |
| | | nach 3h | 37 | 54 | 55 | 55 |
| | | nach 1d | 80 | 75 | 75 | 76 |
| | | nach 3d | 83 | 79 | 79 | 76 |
| Mechanik *frisch* | | | | | | |
| | **Zugfestigkeit** | | 2.1 MPa | 5.5 MPa | 5.0 MPa | 5.2 MPa |
| | **Bruchdehnung** | | 51 % | 160 % | 92 % | 136 % |
| | **E-Modul 5%** | | 16.8 MPa | 22.0 MPa | 25.0 MPa | 22.8 MPa |
| Mechanik *gelagert* | | | | | | |
| | **Zugfestigkeit** | | 3.3 MPa | 6.0 MPa | 5.2 MPa | 5.8 MPa |
| | **Bruchdehnung** | | 81 % | 151 % | 96% | 139 % |
| | **E-Modul 5%** | | 23.4 MPa | 19.9 MPa | 25.5 MPa | 22.3 MPa |

## Patentansprüche

1. Zusammensetzung umfassend
- eine erste Komponente enthaltend mindestens ein Polyol, und
- eine zweite Komponente enthaltend mindestens ein Polyisocyanat,
wobei die Zusammensetzung weiterhin mindestens ein Aldimin der Formel (I) enthält, 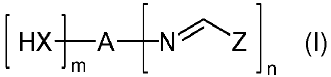
wobei
m für 0 oder 1 und n für eine ganze Zahl von 1 bis 4 steht, wobei (m+n) für 2 oder 3 oder 4 steht,
Z für einen mit einer Alkyl- oder Alkoxy-Gruppe substituierten Aryl-Rest mit insgesamt 12 bis 26 C-Atomen steht, und
A für einen (m+n)-wertigen aliphatischen, cycloaliphatischen oder arylaliphatischen, gegebenenfalls Ether-Sauerstoff oder Am in-Stickstoff aufweisenden Kohlenwasserstoff-Rest mit einem Molekulargewicht im Bereich von 28 bis 6'000 g/mol steht, und
X für O oder S oder NR⁰ steht, wobei R⁰ für einen Wasserstoff-Rest oder für einen Kohlenwasserstoff-Rest mit 1 bis 30 C-Atomen steht, welcher gegebenenfalls mindestens eine Carbonsäureester-, Nitril-, Nitro-, Phosphonsäureester-, Sulfon- oder Sulfonsäureester-Gruppe oder Aldiminogruppe der Formel 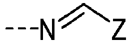 aufweist.

2. Zusammensetzung gemäss Anspruch 1, **dadurch gekennzeichnet, dass** das Aldimin der Formel (I) ein Bestandteil der ersten Komponente ist.

3. Zusammensetzung gemäss Anspruch 1 oder 2, **dadurch gekennzeichnet, dass** Z für einen Rest der Formel (II) steht, 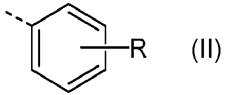 wobei R für einen linearen oder verzweigten Alkyl- oder Alkoxy-Rest mit 6 bis 20 C-Atomen steht.

4. Zusammensetzung gemäss Anspruch 3, **dadurch gekennzeichnet, dass** R verzweigt ist.

5. Zusammensetzung gemäss einem der Ansprüche 1 bis 4, **dadurch gekennzeichnet, dass** m für 0 und n für 2 oder 3 stehen.

6. Zusammensetzung gemäss Anspruch 5, **dadurch gekennzeichnet, dass** A
- entweder für einen zwei- oder dreiwertigen aliphatischen oder cycloaliphatischen Kohlenwasserstoff-Rest mit einem Molekulargewicht im Bereich von 28 bis 500 g/mol,
- oder für einen zwei- oder dreiwertigen Polyoxyalkylen-Rest mit einem zahlenmittleren Molekulargewicht im Bereich von 170 bis 6'000 g/mol steht.

7. Zusammensetzung gemäss einem der Ansprüche 1 bis 4, **dadurch gekennzeichnet, dass** m für 1 und n für 1 stehen.

8. Zusammensetzung gemäss Anspruch 7, **dadurch gekennzeichnet, dass** A für einen zweiwertigen aliphatischen oder cycloaliphatischen oder arylaliphatischen, gegebenenfalls Ether-Sauerstoff oder Amin-Stickstoff aufweisenden Kohlenwasserstoff-Rest mit einem Molekulargewicht im Bereich von 28 bis 500 g/mol steht.

9. Zusammensetzung gemäss einem der Ansprüche 1 bis 8, **dadurch gekennzeichnet, dass** sie ein Gemisch aus Aldiminen der Formel (I) enthält, bei welchen Z jeweils für einen Rest der Formel (II) steht und R dabei ausgewählt ist aus linearen oder insbesondere verzweigten Decyl-, Undecyl-, Dodecyl-, Tridecyl- und Tetradecyl-Resten.

10. Zusammensetzung gemäss einem der Ansprüche 1 bis 9, **dadurch gekennzeichnet, dass** das Polyol ein zahlenmittleres Molekulargewicht im Bereich von 400 bis 10'000 g/mol aufweist.

11. Zusammensetzung gemäss einem der Ansprüche 1 bis 10, **dadurch gekennzeichnet, dass** das Polyisocyanat ausgewählt ist aus der Gruppe bestehend aus bei Raumtemperatur flüssigen Formen von 4,4'- oder 2,4'-oder 2,2'-Diphenylmethandiisocyanat oder beliebigen Gemischen dieser Isomeren oder Gemischen aus 4,4'- oder 2,4'- oder 2,2'-Diphenylmethandiisocyanat und deren Homologen; Isocyanatgruppen-haltigen Polyurethanpolymeren basierend auf 1,6-Hexamethylendiisocyanat oder 1-Iso-cyanato-3,3,5-trimethyl-5-isocyanatomethylcyclohexan oder 2,4- oder 2,6-Toluylendiisocyanat oder beliebigen Gemischen dieser Isomere oder 4,4'-oder 2,4'- oder 2,2'-Diphenylmethandiisocyanat; und Oligomeren von 1,6-Hexamethylendiisocyanat oder 1-Isocyanato-3,3,5-trimethyl-5-isocyanatomethylcyclohexan oder 2,4- oder 2,6-Toluylendiisocyanat oder beliebigen Gemischen dieser Isomere.

12. Zusammensetzung gemäss einem der Ansprüche 1 bis 11, **dadurch gekennzeichnet, dass** die erste Komponente zusätzlich mindestens einen Kettenverlängerer in Form eines Diols mit zwei primären Hydroxylgruppen und einem zahlenmittleren Molekulargewicht im Bereich von 60 bis 150 g/mol enthält.

13. Zusammensetzung gemäss einem der Ansprüche 1 bis 12, **dadurch gekennzeichnet, dass** sie zusätzlich mindestens einen weiteren Bestandteil ausgewählt aus Katalysatoren, Füllstoffen, Weichmachern und Lösemitteln enthält.

14. Zusammensetzung gemäss einem der Ansprüche 1 bis 13, **dadurch gekennzeichnet, dass** sie einen Klebstoff oder einen Dichtstoff oder eine Beschichtung darstellt.

15. Verwendung einer Zusammensetzung gemäss Anspruche 14, welche eine Beschichtung darstellt, als elastische Flüssigfolie zur Bauwerksabdichtung.

## Claims

1. Composition comprising
- a first component comprising at least one polyol, and
- a second component comprising at least one polyisocyanate,
wherein the composition further comprises at least one aldimine of the formula (I) 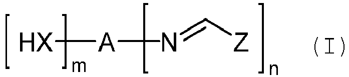
where
m is 0 or 1 and n is an integer from 1 to 4, where (m+n) is 2 or 3 or 4,
Z is an aryl radical substituted by an alkyl or alkoxy group and having a total of 12 to 26 carbon atoms, and
A is an (m+n)-valent aliphatic, cycloaliphatic or arylaliphatic hydrocarbyl radical optionally containing ether oxygen or amine nitrogen and having a molecular weight in the range from 28 to 6'000 g/mol, and
X is O or S or NR⁰ where R⁰ is a hydrogen radical or is a hydrocarbyl radical which has 1 to 30 carbon atoms and optionally has at least one carboxylic ester, nitrile, nitro, phosphonic ester, sulfone or sulfonic ester group or aldimino group of the formula

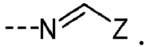

2. Composition according to Claim 1, **characterized in that** the aldimine of the formula (I) is an ingredient of the first component.

3. Composition according to Claim 1 or 2, **characterized in that** Z is a radical of the formula (II) 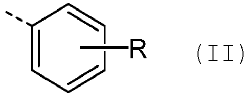 where R is a linear or branched alkyl or alkoxy radical having 6 to 20 carbon atoms.

4. Composition according to Claim 3, **characterized in that** R is branched.

5. Composition according to any of Claims 1 to 4, **characterized in that** m is 0 and n is 2 or 3.

6. Composition according to Claim 5, **characterized in that** A is
- either a di- or trivalent aliphatic or cycloaliphatic hydrocarbyl radical having a molecular weight in the range from 28 to 500 g/mol,
- or a di- or trivalent polyoxyalkylene radical having a number-average molecular weight in the range from 170 to 6'000 g/mol.

7. Composition according to any of Claims 1 to 4, **characterized in that** m is 1 and n is 1.

8. Composition according to Claim 7, **characterized in that** A is a divalent aliphatic or cycloaliphatic or arylaliphatic hydrocarbyl radical optionally containing ether oxygen or amine nitrogen and having a molecular weight in the range from 28 to 500 g/mol.

9. Composition according to any of Claims 1 to 8, **characterized in that** it comprises a mixture of aldimines of the formula (I) in which each Z is a radical of the formula (II) and R is selected from linear or particularly branched decyl, undecyl, dodecyl, tridecyl and tetradecyl radicals.

10. Composition according to any of Claims 1 to 9, **characterized in that** the polyol has a number-average molecular weight in the range from 400 to 10'000 g/mol.

11. Composition according to any of Claims 1 to 10, **characterized in that** the polyisocyanate is selected from the group consisting of room temperature liquid types of diphenylmethane 4,4'- or 2,4'- or 2,2'-diisocyanate or any desired mixtures of these isomers or mixtures of diphenylmethane 4,4'- or 2,4'- or 2,2'-diisocyanate and their homologs; polyurethane polymers containing isocyanate groups and based on hexamethylene 1,6-diisocyanate or 1-isocyanato-3,3,5-trimethyl-5-isocyanatomethylcyclohexane or toluene 2,4- or 2,6-diisocyanate or any desired mixtures of these isomers or diphenylmethane 4,4'-or 2,4'- or 2,2'-diisocyanate; and oligomers of hexamethylene 1,6-diisocyanate or 1-isocyanato-3,3,5-trimethyl-5-isocyanatomethylcyclohexane or toluene 2,4- or 2,6-diisocyanate or any desired mixtures of these isomers.

12. Composition according to any of Claims 1 to 11, **characterized in that** the first component additionally comprises at least one chain extender in the form of a diol having two primary hydroxyl groups and a number-average molecular weight in the range from 60 to 150 g/mol.

13. Composition according to any of Claims 1 to 12, **characterized in that** it additionally comprises at least one further ingredient selected from catalysts, fillers, plasticizers and solvents.

14. Composition according to any of Claims 1 to 13, **characterized in that** it is an adhesive or a sealant or a coating.

15. Use of a composition according to Claim 14, in the form of a coating, as elastic liquid applied membrane to seal a built structure.

## Revendications

1. Composition comprenant
- un premier composant contenant au moins un polyol, et
- un second composant contenant au moins un polyisocyanate,
la composition contenant en outre au moins une aldimine de Formule (I), 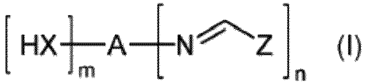
dans laquelle
m représente 0 ou 1 et n représente un nombre entier de 1 à 4, (m + n) représentant 2 ou 3 ou 4,
Z représente un radical aryle substitué par un groupe alkyle ou alcoxy, ayant en tout 12 à 26 atomes de carbone, et
A représente un radical hydrocarboné (m + n)-valent, aliphatique, cycloaliphatique ou arylaliphatique, comprenant éventuellement un oxygène d'éther ou un azote d'amine, ayant une masse moléculaire dans la plage de 28 à 6 000 g/mol, et
X représente O ou S ou NR⁰, R⁰ représentant un radical hydrogène ou un radical hydrocarboné ayant 1 à 30 atomes de carbone, qui comprend éventuellement au moins un groupe ester d'acide carboxylique, nitrile, nitro, ester d'acide phosphonique, sulfo ou ester d'acide sulfonique ou un groupe aldimino de Formule

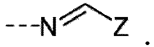

2. Composition selon la revendication 1, **caractérisée en ce que** l'aldimine de Formule (I) est un constituant du premier composant.

3. Composition selon la revendication 1 ou 2, **caractérisée en ce que** Z représente un radical de Formule (II), 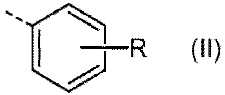 dans laquelle R représente un radical alkyle ou alcoxy linéaire ou ramifié ayant 6 à 20 atomes de carbone.

4. Composition selon la revendication 3, **caractérisée en ce que** R est ramifié.

5. Composition selon l'une des revendications 1 à 4, **caractérisée en ce que** m représente 0 et n représente 2 ou 3.

6. Composition selon la revendication 5, **caractérisée en ce que** A représente
- soit un radical hydrocarboné divalent ou trivalent aliphatique ou cycloaliphatique ayant une masse moléculaire dans la plage de 28 à 500 g/mol,
- soit un radical polyoxyalkylène divalent ou trivalent ayant une masse moléculaire moyenne en nombre dans la plage de 170 à 6 000 g/mol.

7. Composition selon l'une des revendications 1 à 4, **caractérisée en ce que** m représente 1 et n représente 1.

8. Composition selon la revendication 7, **caractérisée en ce que** A représente un radical hydrocarboné divalent aliphatique ou cycloaliphatique ou arylaliphatique, comprenant éventuellement un oxygène d'éther ou un azote d'aminé, ayant une masse moléculaire dans la plage de 28 à 500 g/mol.

9. Composition selon l'une des revendications 1 à 8, **caractérisée en ce qu'**elle contient un mélange d'aldimines de Formule (I), dans lesquelles chaque Z représente un radical de Formule (II) et R est alors choisi parmi les radicaux décyle, undécyle, dodécyle, tridécyle et tétradécyle linéaires ou en particulier ramifiés.

10. Composition selon l'une des revendications 1 à 9, **caractérisée en ce que** le polyol présente une masse moléculaire moyenne en nombre dans la plage de 400 à 10 000 g/mol.

11. Composition selon l'une des revendications 1 à 10, **caractérisée en ce que** le polyisocyanate est choisi dans le groupe consistant en les formes liquides à la température ambiante du diisocyanate de 4,4'- ou de 2,4'- ou de 2,2'-diphénylméthane ou les mélanges quelconques de ces isomères ou les mélanges de diisocyanate de 4,4'- ou de 2,4'- ou de 2,2'-diphénylméthane et de leurs homologues ; les polymères de polyuréthane contenant des groupes isocyanate à base de diisocyanate de 1,6-hexaméthylène ou de 1-isocyanato-3,3,5-triméthyl-5-isocyanatométhylcyclohexane ou de diisocyanate de 2,4- ou de 2,6-toluylène ou de mélanges quelconques de ces isomères ou de diisocyanate de 4,4'- ou de 2,4'- ou de 2,2'-diphénylméthane ; et les oligomères de diisocyanate de 1,6-hexaméthylène ou de 1-isocyanato-3,3,5-triméthyl-5-isocyanato-méthylcyclohexane ou de diisocyanate de 2,4- ou de 2,6-toluylène ou de mélanges quelconques de ces isomères.

12. Composition selon l'une des revendications 1 à 11, **caractérisée en ce que** le premier composant contient en outre au moins un prolongateur de chaîne sous forme d'un diol ayant deux groupes hydroxyle primaires et présentant une masse moléculaire moyenne en nombre dans la plage de 60 à 150 g/mol.

13. Composition selon l'une des revendications 1 à 12, **caractérisée en ce qu'**elle contient en outre au moins un autre constituant choisi parmi les catalyseurs, les charges, les plastifiants et les solvants.

14. Composition selon l'une des revendications 1 à 13, **caractérisée en ce qu'**elle représente un adhésif ou un matériau d'étanchéité ou un revêtement.

15. Utilisation d'une composition selon la revendication 14, qui représente un revêtement, en tant que feuille liquide élastique pour l'étanchéification d'un ouvrage de construction.
